# EUROPEAN PATENT APPLICATION

(11) **EP 4 851 894 A1**
(43) Date of publication of application: **09.12.2026**
(21) Application number: 25748683.7
(22) Date of filing: 29.01.2025
(51) Int. Cl.: G06Q 10/30

(54) **METHOD FOR MANAGING RECYCLING OF METAL RESOURCES**

(30) Priority: 29.01.2024 JP 2024010918; 24.10.2024 JP 2024187615; 07.11.2024 JP 2024195381
(71) Applicant: JX Advanced Metals Corporation, Tokyo 105-8417 (JP)
(72) Inventor: ORIKASA, Hironori, Tokyo 105-8417 (JP); HAYASHIBARA, Taiki, Tokyo 105-8417 (JP); TATEMOTO, Kai, Tokyo 105-8417 (JP)
(74) Representative: Arnold & Siedsma
(86) International application number: PCT/JP2025/002820
(87) International publication number: WO 2025/164680

(57) **Abstract**

The present disclosure aims to provide means for realizing a new mechanism that promotes the recycling of metal resources.

A method for managing recycling of metal resources,
the method comprising:
(A) a first step of obtaining a first metal resource provided by a plurality of parties;
(C) a third step of manufacturing a metal material using a raw material;
(D) a fourth step of receiving information, by a terminal from a server, wherein the information is regarding a first shipment quota for a recycled product that is accounted for as having been manufactured exclusively from the first metal resource having a specific attribute among the first metal resources obtained in the first step;
(E) a fifth step of shipping the metal material as the recycled product to a party associated with the specific attribute; and
(F) a sixth step of sending, by the terminal, information regarding the shipment in the fifth step to the server and causing the server to update the information regarding the first shipment quota stored in the server so that the first shipment quota is subtracted by an amount of the recycled product subject to the shipment.

## Description

### [Technical Field]

The present disclosure relates to a method for managing recycling of metal resources.

### [Background Art]

In recent years, efforts to recycle metal resources have been accelerating from the perspective of the SDGs. Companies are also actively working to obtain metal resources, which serve as raw materials for products, not only from minerals but also from scrap and other materials that have already been turned into products and have reached the end of their useful life.

Patent Document 1 discloses a method for certifying recycled products executed by a computer system. Furthermore, this document discloses the handling of information indicating the outflow volume of recycled certified resin products within a mass balance approach.

### [Prior Art]

### [Patent Document]

[Patent Document 1] WO2022/092278

### [Summary of the Invention]

### [Problems to Be Solved by the Invention]

To promote the initiatives described above, the present disclosure aims to provide means for realizing a new mechanism that promotes the recycling of metal resources.

### [Means for Solving the Problem]

To achieve the above objective, the present disclosure provides, in one aspect, the following inventions.

### (Invention 1)

A method for managing recycling of metal resources,
the method comprising:
(A) a first step of obtaining a first metal resource provided by a plurality of parties, wherein the first metal resource is a used article intended for recycling or offcuts or waste material generated during a manufacturing process of the article;
(B) optionally, a second step of obtaining a second metal resource, wherein the second metal resource originates from minerals;
(C) a third step of manufacturing a metal material using a raw material, wherein the raw material includes the first metal resource obtained in the first step, and the raw material may also include the second metal resource obtained in the second step;
(D) a fourth step of receiving information, by a terminal from a server, wherein the information is regarding a first shipment quota for a recycled product that is accounted for as having been manufactured exclusively from the first metal resource having a specific attribute among the first metal resources obtained in the first step, and wherein the first shipment quota depends on an amount by which the first metal resource having the specific attribute contributed, or is expected to contribute, to the manufacture of the metal material in the third step;
(E) a fifth step of shipping the metal material as the recycled product to a party associated with the specific attribute; and
(F) a sixth step of sending, by the terminal, information regarding the shipment in the fifth step to the server and causing the server to update the information regarding the first shipment quota stored in the server so that the first shipment quota is subtracted by an amount of the recycled product subject to the shipment.

### (Invention 2)

The method according to Invention 1, wherein the specific attribute includes, at least, a fact that the first metal resource was provided by a specific one party of the plurality of parties, and the party associated with the specific attribute is the specific one party.

### (Invention 3)

The method according to Invention 1 or 2, wherein the specific attribute includes, at least, a fact that the first metal resource originates from a specific use, and the party associated with the specific attribute is a party associated with the same use as the specific use.

### (Invention 4)

The method according to any one of Inventions 1 - 3, wherein the specific attribute includes, at least, a fact that the first metal resource originates from a specific location, and the party associated with the specific attribute is a party associated with the specific location.

### (Invention 5)

The method according to any one of Inventions 1 - 4, wherein the specific attribute includes, at least, a fact that the first metal resource originates from a specific manufacturer, and the party associated with the specific attribute is the specific manufacturer.

### (Invention 6)

The method according to any one of Inventions 1 - 5, wherein the method further comprises
a step of receiving information by the terminal from the server, wherein the information is regarding a second shipment quota for the recycled product that is accounted for as having been manufactured exclusively from the first metal resource having the specific attribute, wherein the second shipment quota depends on an amount by which the first metal resource provided by the plurality of parties contributed to, or is expected to contribute to, the manufacture of the metal material in the third step.

### (Invention 7)

The method according to any one of Inventions 1 - 6, further comprising a step of receiving, by the terminal from the server, information regarding a carbon footprint of the recycled product (hereinafter referred to as "product carbon footprint information") assigned to the recycled product, which is accounted for as having been manufactured exclusively from the first metal resource having the specific attribute.

### (Invention 8)

The method according to Invention 7, further comprising a step of receiving, by the terminal, information regarding a carbon footprint of the first metal resource.

### (Invention 9)

The method according to Invention 8, further comprising a step of receiving, by the terminal from the server, information regarding the carbon footprint of the first metal resource and/or information regarding a carbon footprint related to the third step.

### (Invention 10)

The method according to any one of Inventions 1 - 6, further comprising a step of sending, by the terminal to the server, information regarding a carbon footprint of the recycled product (hereinafter referred to as "product carbon footprint information") assigned to the recycled product, which is accounted for as having been manufactured exclusively from the first metal resource having the specific attribute.

### (Invention 11)

The method according to any one of Inventions 7 - 10, wherein the product carbon footprint information is calculated on the premise that the recycled product was manufactured exclusively from the first metal resource having the specific attribute, and is calculated using, at least, information regarding the carbon footprint of the first metal resource having the specific attribute.

### (Invention 12)

The method according to any one of Inventions 1 - 11, wherein the metal material is electrolytic copper.

### (Invention 13)

A method for manufacturing a metal material, using the method according to any one of Inventions 1 - 12, such that the metal material is accounted for as having been manufactured exclusively from the first metal resource.

### (Invention 14)

A method for manufacturing a recycled product using the method according to any one of Inventions 7 - 10, wherein information regarding the carbon footprint of the recycled product is assigned to the recycled product.

### [Effect of the Invention]

In one aspect, the present invention handles information regarding a first shipment quota of the recycled product that is accounted for as having been manufactured exclusively from the first metal resource having the specific attribute. Furthermore, the first shipment quota depends on an amount by which the first metal resource having the specific attribute contributed, or is expected to contribute, to the manufacture of the metal material in the third step. Furthermore, the first metal resource is a used article intended for recycling or offcuts or waste material generated during a manufacturing process of the article.

A shipment quota may be assigned to a party associated with the first metal resource having a specific attribute. This enables the use of 100% recycled materials having a specific attribute.

### [Brief Description of the Drawings]

[FIG. 1] A method of the present disclosure in one embodiment is shown.
[FIG. 2] The concept of the mass balance approach is described.
[FIG. 3] The concept of the mass balance approach is described. The difference between Figure 2 and Figure 3 is that Figure 2 represents the actual shipment status for Company A, whereas Figure 3 represents the conceptual shipment status under the mass balance approach. Although every metal material actually shipped is a 25% recycled material, a portion of the shipped products is treated as if a 100% recycled material were shipped.
[FIG. 4] An information processing device of the present disclosure in one embodiment is shown.
[FIG. 5] A system of the present disclosure in one embodiment is shown.
[FIG. 6] A system of the present disclosure in one embodiment is shown, along with a terminal external to the system.
[FIG. 7] Databases are shown, which are included in a system (for example, a server) of the present disclosure in one embodiment or in a cloud server external to the system.
[FIG. 8-1] The flow of a first metal resource, a second metal resource, and a metal material in a method of the present disclosure in one embodiment is shown. Although every metal material actually shipped is a 25% recycled material, it is treated as if a 100% recycled material were shipped.
[FIG. 8-2] The flow of the first metal resource, the second metal resource, and the metal material in a method of the present disclosure in one embodiment is shown. The metal materials shipped are treated as if they were recycled products manufactured exclusively from scrap originating from Company B.
[FIG. 9] The flow of the first metal resource, the second metal resource, and the metal material in a method of the present disclosure in one embodiment is shown. Although every metal material actually shipped is a 25% recycled material, it is treated as if a 100% recycled material were shipped.
[FIG. 10] The flow of the first metal resource, the second metal resource, and the metal material in a method of the present disclosure in one embodiment is shown. The metal materials shipped are treated as if they were recycled products manufactured exclusively from scrap originating from electronic components.
[FIG. 11] The flow of the first metal resource, the second metal resource, and the metal material in a method of the present disclosure in one embodiment is shown. The metal materials shipped are treated as if they were recycled products manufactured exclusively from scrap originating from electronic components. Accordingly, an amount of the carbon footprint corresponding to the scrap originating from electronic components is assigned to the metal materials shipped.
[FIG. 12] The flow of the first metal resource, the second metal resource, and the metal material in a method of the present disclosure in one embodiment is shown. The metal materials shipped are treated as if they were recycled products manufactured exclusively from scrap originating from a specific country. Accordingly, an amount of the carbon footprint corresponding to the scrap originating from the specific country is assigned to the metal materials shipped.
[FIG. 13] The flow of the first metal resource, the second metal resource, and the metal material in a method of the present disclosure in one embodiment is shown. The metal materials shipped are treated as if they were recycled products manufactured exclusively from scrap originating from a specific manufacturer. Accordingly, an amount of the carbon footprint corresponding to the scrap originating from the specific manufacturer is assigned to the metal materials shipped.
[FIG. 14] The flow of the first metal resource, and the metal material in a method of the present disclosure in one embodiment is shown. The metal materials shipped are treated as if they were recycled products manufactured exclusively from scrap originating from a specific manufacturer. Accordingly, an amount of the carbon footprint corresponding to the scrap originating from the specific manufacturer is assigned to the metal materials shipped.

### [Embodiments for Implementing the Invention]

The following describes specific embodiments for implementing the invention. The following description is intended to facilitate understanding of the invention. That is, it is not intended to limit the scope of the present invention.

### 1. Overview

### 1-1. Overview of the method

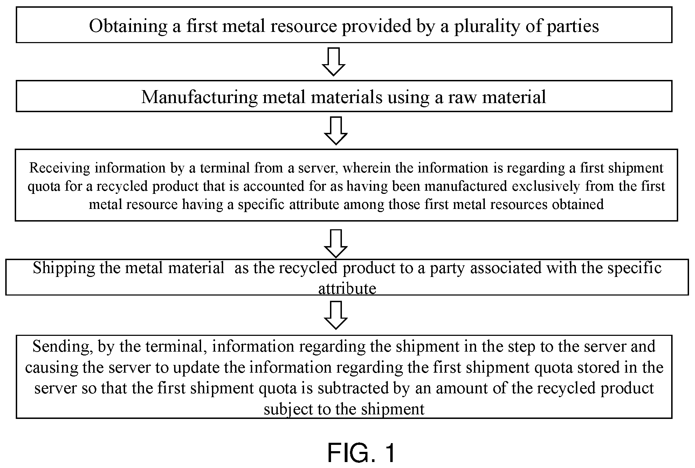

In one embodiment, the present disclosure relates to a method for managing recycling of metal resources. The method comprises the following steps (see Fig. 1).
(A) a first step of obtaining a first metal resource provided by a plurality of parties, wherein the first metal resource is a used article intended for recycling or offcuts or waste material generated during a manufacturing process of the article;
(B) optionally, a second step of obtaining a second metal resource, wherein the second metal resource originates from minerals;
(C) a third step of manufacturing metal materials using a raw material, wherein the raw material includes the first metal resource obtained in the first step, and the raw material may also include the second metal resource obtained in the second step;
(D) a fourth step of receiving information, by a terminal from a server, wherein the information is regarding a first shipment quota for a recycled product that is accounted for as having been manufactured exclusively from the first metal resource having a specific attribute among the first metal resources obtained in the first step, and wherein the first shipment quota depends on an amount by which the first metal resource having the specific attribute contributed, or is expected to contribute, to the manufacture of the metal material in the third step;
(E) a fifth step of shipping the metal material as the recycled product to a party associated with the specific attribute; and
(F) a sixth step of sending, by the terminal, information regarding the shipment in the fifth step to the server and causing the server to update the information regarding the first shipment quota stored in the server so that the first shipment quota is subtracted by an amount of the recycled product subject to the shipment.

In the above method, the second step is performed optionally. Therefore, in the above method, performing the second step may be omitted. Furthermore, if the second step is performed, the raw material used in the third step may include the second metal resource obtained in the second step. On the other hand, if the second step is not performed, the raw materials used in the third step do not include the second metal resource obtained in the second step.

Furthermore, in another embodiment, the present disclosure relates to a method for manufacturing a metal material that is accounted for as having been manufactured exclusively from the first metal resource using the above method.

Although not limited, a specific attribute may include one or more of the following: the source of the first metal resource, uses related to the first metal resource, locations related to the first metal resource, and the manufacturer of the source of the first metal resource, etc. Accordingly, a party that is associated with a specific attribute and is a shipping destination may, for example, be as follows:
(Example 1) When the specific attribute is the source of the first metal resource (i.e., when the first metal resource is supplied by a specific one among a plurality of parties): The specific one among a plurality of suppliers of the first metal resource (see, "3. Step of obtaining a first metal resource provided by a plurality of parties (the first step)" - "10. Other Processes, etc." described below)
(Example 2) When the specific attribute is the use associated with the first metal resource (i.e., when the first metal resource originates from a specific use): A party associated with the same use (for example, a party seeking to obtain metal materials for use in the specific use) (see "11-1. Management for each use" , etc. described below)
(Example 3) When the specific attribute is a location associated with the first metal resource (i.e., when the first metal resource originates from a specific location): A party associated with the location (for example, a party intending to obtain metal materials for manufacturing, use, and/or sale at the location) (see "11-2. Management for each location" etc., described below)
(Example 4) When the specific attribute is a manufacturer of articles associated with the first metal resource (i.e., when the first metal resource originates from a specific manufacturer): the specific manufacturer (see, "11-3. Management by manufacturer of article" described below)

In Example 1, a shipment quota may be assigned to a supplier of the first metal resource. As a result, the supplier can utilize 100% recycled materials.

In Example 2, a shipment quota may be assigned to a party associated with the first metal resource originating from a specific use. As a result, the party can use 100% recycled materials related to the same specific use. This is advantageous from the perspective of achieving horizontal recycling.

In Example 3, a shipment quota may be assigned to a party associated with the first metal resource originating from a specific location. As a result, the party can use 100% recycled materials associated with that same specific location. This is advantageous from the perspective of achieving resource circulation at the specific location.

In Example 4, a shipment quota may be assigned to a party associated with the first metal resource originating from a specific manufacturer of articles. As a result, the party can use 100% recycled materials associated with the same specific manufacturer. This is advantageous from the perspective of a closed-loop recycling system.

### 1-2. Mass balance approach

In a further embodiment, the shipment quota in the above method may be based on a mass balance approach. The mass balance approach is "a method in which, during the processing and distribution stages from raw materials to products, when raw materials having a specific property are mixed with other raw materials not having that property, the property is assigned to a part of the products depending on an input amount of the raw materials having the property."

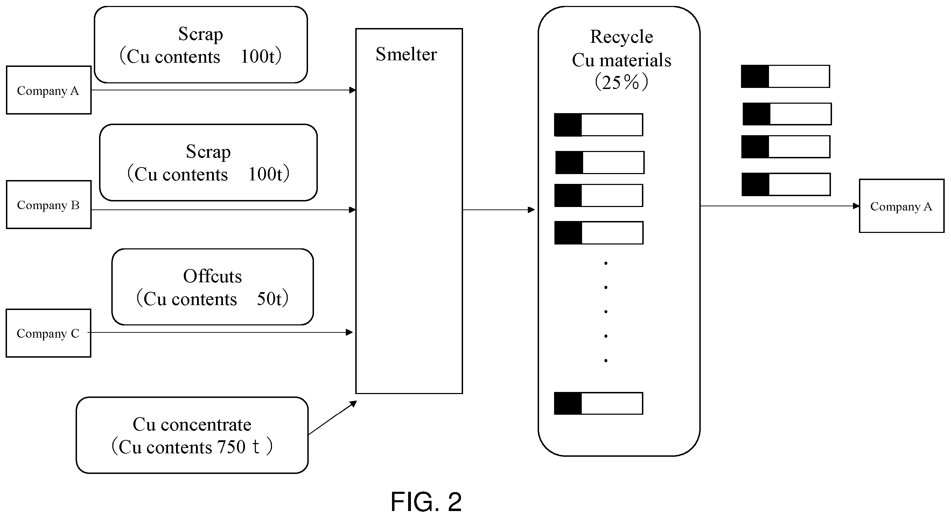

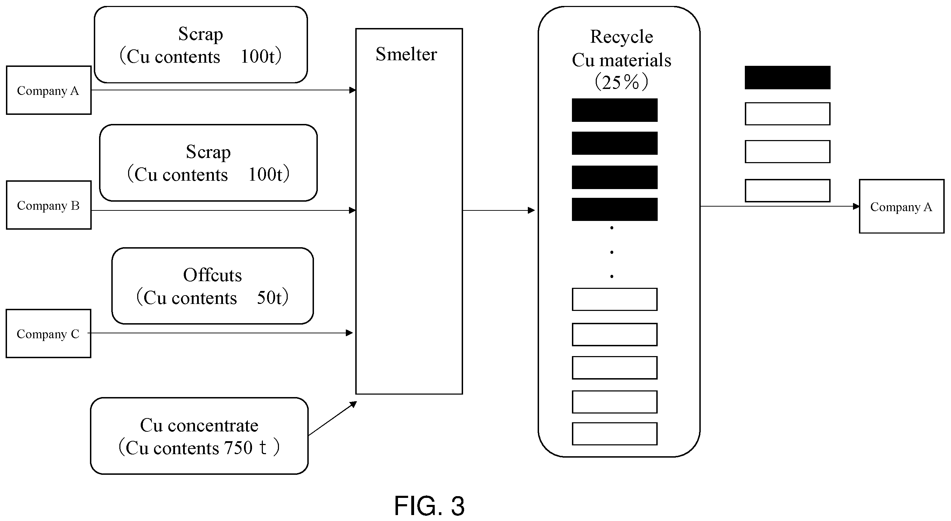

The mass balance approach is described using Figures 2 and 3 as specific examples. The example in Figure 2 illustrates the recycling of Cu as a metal resource. Companies A through Company C supply raw materials for recycling, such as scrap containing Cu, to the smelter. In addition, Cu originating from a mine (Cu as virgin material) is also supplied to the smelter. These are blended to produce new copper materials (for example, copper ingots). In the example shown in Figure 2, the amount of copper supplied by Companies A through C is 250 tons, and the amount of copper supplied from copper concentrate is 750 tons. Therefore, the recycled content ratio is calculated as 250 tons / (250 tons + 750 tons) = 0.25. Consequently, the recycled content ratio for the copper material manufactured at the smelter is 25%.

In Figure 2, four copper ingots are shipped to Company A. The individual copper ingots themselves are not 100% recycled products (metal materials manufactured exclusively from recycled raw materials). However, under the mass balance approach, as shown in Figure 3, some of the copper ingots may be treated as 100% recycled products, and these 100% recycled products may be treated as having been shipped to Company A. Note that hereinafter, metal materials deemed to be 100% recycled products under the mass balance approach, or metal materials manufactured exclusively from raw materials for recycling, may be referred to as "recycled products."

Adopting the mass balance approach in this manner offers advantages such as the ability to supply products originating from 100% recycled and certified raw materials, regardless of their actual content.

The examples in Figures 2 and 3 illustrate cases where the characteristics of a raw material - specifically, that it is a recycled raw material- are assigned to a portion of the products. However, under the mass balance approach, it is possible not only to assign characteristics of raw materials (for example, physical or chemical properties inherent to the raw materials themselves, such as the recycled content ratio) but also to assign an attribute of the raw materials. For example, other attributes mentioned above - such as "the source of the first metal resource," "uses related to the first metal resource," "locations related to the first metal resource," and "the manufacturer of the source of the first metal resource" - can also be assigned to a portion of the products under the mass balance approach. An example of assigning "the source of the first metal resource" as a specific attribute of a raw material to a portion of the products is described hereinafter. Next, the cases where "uses related to the first metal resource," "locations related to the first metal resource," and "the manufacturer of the source of the first metal resource" are each assigned to a portion of the products as a specific attribute of a raw material will be described in "11-1. Management for each use," "11-2. Management for each location," and "11-3. Management by manufacturer from which the first metal resource originates," respectively.

### 1-3. Metal resources

The types of metals contained in the metal resources used in the method of the present disclosure in one embodiment are not particularly limited. In one embodiment, the metal may be one or more of Fe, Al, Cu, Ag, Au, and Pt. Preferably, the metal is Cu.

### 1-4. Carbon footprint

The term "carbon footprint" (CFP) as used herein is defined in the "Carbon Footprint Guidelines" published by the Ministry of Economy, Trade and Industry and the Ministry of the Environment in May 2023, as follows: "an abbreviation for 'Carbon Footprint of Product,' which refers to a value displayed on a product, or a system for displaying the value, calculated by converting GHG (greenhouse gas) emissions generated throughout the entire life cycle of a product or service-from raw material procurement to disposal and recycling-into CO2 equivalents."

In the present disclosure, "carbon footprint (CFP)" is defined as "a value per unit weight of the product, which is calculated by converting the amount of greenhouse gas (GHG) emissions released during the 'cradle-to-gate' stage of a product's life cycle - from raw material procurement through production - into CO₂ equivalents." Note that, if necessary, the phrase "per unit weight of the product" may be replaced with "per unit number of the product."

Furthermore, if necessary, the phrase "value per unit weight of the product" may be replaced with "value per unit weight of the input materials." For example, such a replacement may be made when managing the carbon footprint associated with a specific treatment or process. Here, the input material may refer to the material as a whole, or it may refer to the amount of a target substance contained within the material. For example, if 1 metric ton of scrap contains 200 kg of copper, one may manage the carbon footprint per unit weight of the scrap, or one may manage the carbon footprint per unit weight of the copper contained in the scrap.

Furthermore, the calculation of the carbon footprint described below is merely illustrative and has been simplified for ease of understanding. Therefore, the scope of the invention is not limited to the specific method for calculating the carbon footprint described below.

### 2. Execution environment

The method of the present disclosure in one embodiment can be executed by a computer program (computer software). In another embodiment, the present disclosure relates to the program, a medium storing the program, a device comprising the program, and a method using the program.

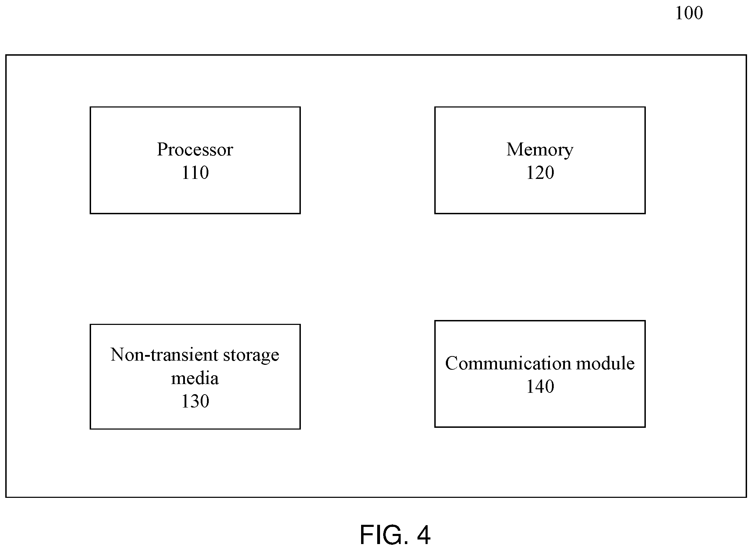

The environment for executing the program and method is not particularly limited, and a typical information processing device (also referred to as a computing device) may be used. Typically, an information processing device (100) may include, as shown in Figure 4, a processor (110), memory (120), non-transient storage media (130), and a communication module (140).

The information processing device (100) may include, for example, but is not limited to: a server, a personal computer, a tablet device, a smartphone, a smart watch, smart glasses, and the like.

The program is stored on non-transient storage media (130, for example, HDD, SSD, etc.), appropriately loaded into memory (120, for example, RAM, etc.), and executed by a processor (110, for example, CPU, etc.). As needed, the program can connect to a network via a communication module (140) to send and receive information.

In one embodiment, the program may be installed on a single information processing device (100) as application software and may be executed by that information processing device (100).

In other embodiments, the number of information processing devices (100) is not limited to one, and a plurality of information processing devices (100) may be used as needed. In such cases, the functions of the program may be distributed among a plurality of information processing devices (100).

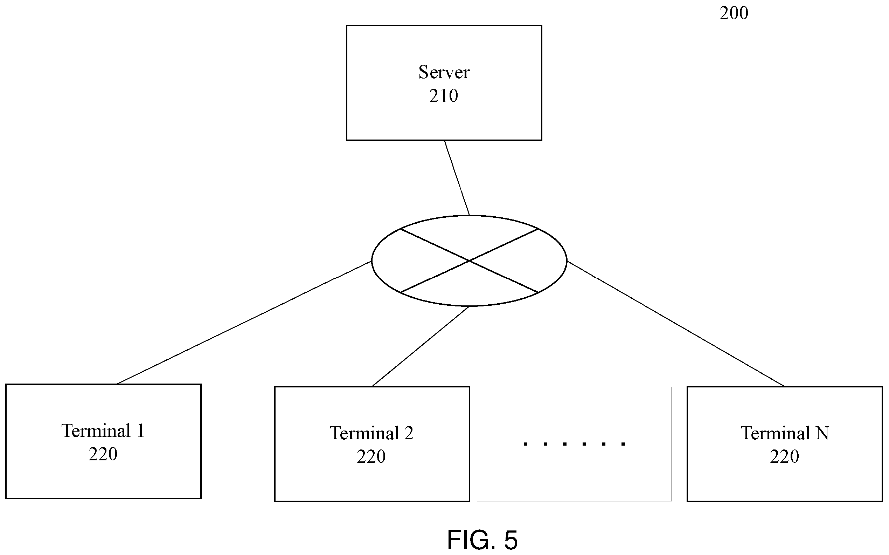

Alternatively, as shown in Figure 5, a system (200) configuration may be adopted in which the server (210) and the terminal (220) are interconnected via a network (for example, the Internet, a LAN, a VPN, etc.). In this system (200), the terminal (220) may receive input from a user and send at least a portion of the received input to the server (210). The server (210) may receive the input information sent from the terminal (220), process the information, and send a portion of the output to the terminal (220). The terminal (220) then receives the output information sent from the server (210) and may display it on the terminal (220).

Therefore, in another aspect, the present disclosure relates to an information processing device comprising a program of the present disclosure, and a system comprising the information processing device. Furthermore, in another aspect, the present disclosure relates to a terminal and/or a server constituting the system of the present disclosure. The internal configurations of the terminal and the server may be the same as those of the information processing device shown in Figure 4. In another aspect, the present disclosure relates to a storage medium on which the program is stored (for example, non-transient storage media, such as a computer-readable non-transient storage medium, for example, an HDD, SSD, flash memory, optical disc, etc.).

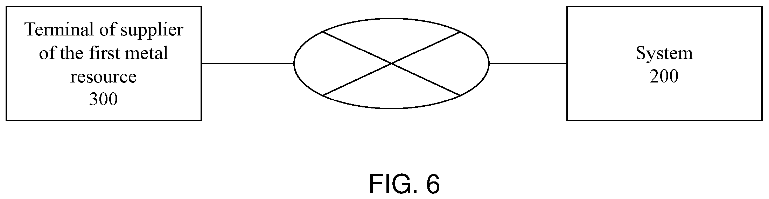

As shown in Figure 6, the aforementioned system 200 may be connected to the terminal (300) of a first metal resource supplier via a network (for example, the Internet). The first metal resource supplier corresponds to Companies A through C in Figures 2 and 3.

This enables the first metal resource supplier to send information regarding articles to be recycled to the server (210) or terminal (220) within the system (200).

The following sections describe in detail the first through sixth steps mentioned above (for example, steps performed by terminal 220 or the smelter) and other steps (for example, steps performed by server 210, terminal 220, and/or the smelter).

### 3. Step of obtaining a first metal resource provided by a plurality of parties (the first step)

As shown in Figures 2 and 3, the smelter is a facility for manufacturing metal materials. The smelter obtains raw materials for manufacturing metal materials. The first metal resource is included as one type of such raw materials. The first metal resource satisfies any one of the following two conditions:
(Condition 1) An already-used article that is subject to recycling, or
(Condition 2) Offcuts or waste material generated during the manufacturing process of an article

Examples of articles corresponding to Condition 1 include, but are not limited to: electronic components; electronic circuit boards; scrap wire; household goods; copper pipes; and jewelry. Examples of offcuts or waste materials corresponding to Condition 2 include, but are not limited to: defective portions of ingots; scraps resulting from cutting; press scrap; and swarf, scrap resulting from grinding, sludge, etc.

Furthermore, the first metal resource may be pretreated by the supplier (including not only a party that directly or indirectly supplied the first metal resource to the smelter, but also any party that directly or indirectly supplied the first metal resource to that supplier) prior to being provided to the smelter. In other words, when determining whether the first metal resource meets the above conditions, it is irrelevant whether pretreatment was performed before it was supplied to the smelter. As part of this pretreatment, for example, the first metal resource may be crushed or ground as appropriate to bring it to a size suitable for metal smelting. For example, as part of the pretreatment, a treatment may be performed to remove at least a portion of substances other than those intended for recovery.

In one example, the first metal resource is shipped from manufacturers, recyclers, scrap collectors, etc., and sent to a smelter. Alternatively, the first metal resource may be provided by individuals.

The supplier of the first metal resource is not limited to a single entity but may be a plurality of entities. Furthermore, the supplier of the first metal resource may supply the first metal resource directly to the smelter, or may supply it indirectly to the smelter through a third party.

### 4. Step of obtaining a second metal resource (the second step)

The smelter may obtain not only the first metal resource but also the second metal resource. Therefore, in some embodiments, metal materials may be manufactured from the first metal resource alone, without obtaining the second metal resource. The second metal resource originates from minerals. For example, the second metal resource may be an ore itself, a concentrate, or a metal material with low purity (e.g., crude copper in the case of copper).

Furthermore, the second metal resource is distinguished from the first metal resource in that it has never been commercialized and is classified as a so-called virgin material.

### 5. Step of manufacturing metal material (the third step)

Metal materials are manufactured at the smelter using the first metal resource described above. The smelter mixes the first metal resources supplied by a plurality of parties to manufacture metal materials. The smelter may perform as appropriate pretreatment on the first metal resource. For example, the first metal resource may be crushed or otherwise processed as appropriate to bring it to a size suitable for metal smelting. For example, the first metal resource may be treated to remove substances other than those intended for recovery. If the smelter performs pretreatment, the pretreatment is also included in the third step. The aforementioned treatment and others related to the step of manufacturing metal materials may be performed by combining the first metal resource and the second metal resource.

The type of metal material is not particularly limited. For example, the metal material may be one or more of the following: bullion, ingots, wire, foil, plate, powder, etc.

Furthermore, the metal material may be, for example, electrolytic copper.

The type of smelting method is not particularly limited. Alternatively, the smelting method may be dry smelting or wet smelting (e.g., solvent extraction, precipitation separation, leaching, etc.).

### 6. Data processing associated with obtaining the first metal resource

Data processing may be performed along with obtaining the first metal resource by the smelter. For example, the supplier of the first metal resource may send information regarding the first metal resource in conjunction with supplying the first metal resource to the smelter.

The information regarding the first metal resource is not limited to, but may include, one or more of the following: information identifying an attribute (for example, information identifying a supplier), information identifying the type of the first metal resource (for example, information on the product prior to scrapping, dismantling history, etc.), the amount of the first metal resource, the metal grade, and the carbon footprint of the first metal resource (including information on the carbon footprint during the process of obtaining the first metal resource and/or the process of supplying the first metal resource to the smelter). The information on the carbon footprint of the first metal resource includes, for example, one or more of the following: information on the carbon footprint associated with the aforementioned pretreatment at the supplier, and information on the carbon footprint associated with transportation.

As shown in Figure 6, sending the information regarding the first metal resource is performed from the first metal resource supplier's terminal 300 to the system 200. Furthermore, the destination for sending the information regarding the first metal resource may be the server 210, or the terminals 220 as shown in Figure 5.

When sending information from the terminal 300 to the server 210, for example, the server 210 may serve as a web server, and the terminal 300 may send the information regarding the first metal resource via a browser. After receiving the information, the server 210 may perform actions such as updating the database. The server 210 may further send the information regarding the first metal resource, or information processed from the information, to the terminal 220.

When sending information from the terminal 300 to the terminal 220, for example, the terminal 300 may send the information regarding the first metal resource to the terminal 220 via means such as email (for example, attaching a file to an email, or sending information indicating the location of cloud storage accessible to both parties). Thereafter, the terminal 220 accesses the server 210 and sends the information regarding the first metal resource, or information processed from the information. The server 210 may then update a database, etc. with the information received from the terminal 220.

The server 210 may have access to a plurality of databases. A database may be provided within the server 210 (for example, within a storage medium possessed by the server 210). Alternatively, a database may exist on a cloud server outside of the system 200.

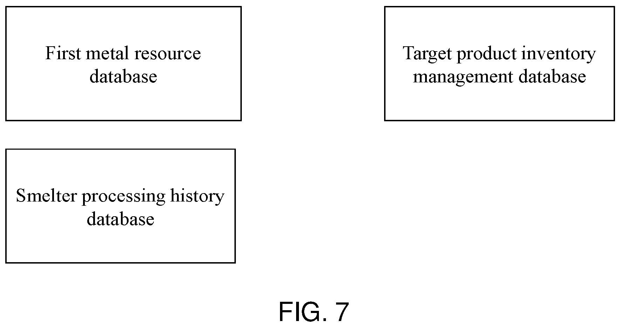

The databases may include, for example, at least three types of databases, as shown in Figure 7.

The first metal resource database can store information regarding the first metal resource described above. The first metal resource database may be configured, for example, to store information regarding one or more of the following items: information identifying an attribute (e.g., information identifying a supplier); information identifying the type of the first metal resource (e.g., information on the product prior to scrapping, dismantling history, etc.); the amount of the first metal resource; the metal grade; information on the carbon footprint of the first metal resource; and delivery lots, etc. The information on the carbon footprint of the first metal resource includes, for example, one or more of the following: information on the carbon footprint associated with the aforementioned pretreatment at the supplier, and information on the carbon footprint associated with transportation.

The information identifying an attribute (e.g., the information identifying the supplier), the information identifying the type of the first metal resource, the amount of the first metal resource, the metal grade, and the information on the carbon footprint of the first metal resource may, for example, be stored in the first metal resource database for each delivery lot. Furthermore, the information on the carbon footprint of the first metal resource may be stored in the first metal resource database in aggregated units where the carbon footprint information is common - for example, when the information is identical for the same attribute (such as the same supplier) or when it is identical for the same type of the first metal resource.

The first metal resource database may be updated by the server 210 based on the information regarding the first metal resource or information processed from the information, after the server 210 receives such information from the terminal 220 or the terminal 300. Furthermore, the information regarding the first metal resource or the information processed from the information may be based on information sent from the terminal 300, or it may be further based on new information added as a result of analysis performed at the smelter or another facility. As an example of the latter, after obtaining the first metal resource, the amount of the first metal resource, the metal grade etc., may be analyzed at the smelter or another facility. The results of such analysis may then be sent from the terminal 220 to the server 210 as information regarding the first metal resource.

The smelter processing history database can store information regarding the smelter's history of manufacturing metal materials. For example, the smelter processing history database may be configured to store information regarding one or more of the following items: the yield of the step of manufacturing metal materials (the third step); the input history of the first metal resource into the third step for each attribute; the total input history of the first metal resource into the third step, regardless of attribute; the input history of the second metal resource into the third step; the fuel or energy required for processing in the third step; and the actual usage history of auxiliary materials (for example, cooling materials) required for processing in the third step. The input history may include information regarding one or more of the following, for example: the physical amount of the first metal resource or the second metal resource input in the third step; the amount of a target metal contained in the first metal resource or the second metal resource input in the third step; the amount of the manufactured metal materials corresponding to the physical amount of the first metal resource or the second metal resource input; and the delivery lot of the first metal resource input.

The target product inventory management database can store information related to the metal materials manufactured at the smelter. For example, the target product inventory management database may be configured to store information regarding one or more of the following items: the attribute of the first metal resource (e.g., a supplier), the carbon footprint of the first metal resource, the amount of the shipment quota for recycled products, the shelf life of the recycled products, and the carbon footprint of the recycled products.

Furthermore, when the smelter manufactures the metal materials using the first metal resource, a portion of the manufactured metal materials is treated, based on the mass balance approach, as having been manufactured exclusively from the first metal resource.

The amount of the shipment quota for the recycled products included in the target product inventory management database comprises, as described below, the amount of the shipment quota individually assigned for each attribute of the first metal resource (for example, by a supplier) and the amount of the shipment quota for the recycled products as a whole.

The shelf life for the recycled products refers to the period during which the metal materials can be shipped as the recycled products. The shelf life for the recycled products is set, for example, as a fixed period (e.g., one year) beginning from the time of manufacture of the metal material. Furthermore, the amount of the shipment quota for the recycled products may be stored in the target product inventory management database, categorized according to the shelf life of the recycled products.

The information on the carbon footprint of the recycled products may include both the carbon footprint information of the step of manufacturing the metal materials (the third step) and the carbon footprint information of the first metal resource. By including both types of information, it is possible to manage the carbon footprint from the first metal resource to the manufacture of the metal material.

The information on the carbon footprint of the recycled products can be obtained by referencing the first metal resource database and the smelter processing history database. For example, the carbon footprint of the first metal resource (per unit weight of the metal materials) can be calculated by appropriately considering the amount of the first metal resource, the metal grade, and the carbon footprint information contained in the first metal resource database, and the yield of the step of manufacturing the metal materials (the third step) contained in the smelter processing history database. Furthermore, for example, by appropriately considering the input history of the first metal resource as a whole in the third step, the input history of the second metal resource in the third step, the fuel or energy required for the process of the third step, and the actual usage history of auxiliary materials (for example, cooling materials) required for the third step, all of which are contained in the smelter processing history database, it is possible to calculate the information of the carbon footprint of the third step (per unit weight of metal material). Then, by adding the two calculated values (i.e., the carbon footprint of the first metal resource (per unit weight of metal material) and the carbon footprint of the third step (per unit weight of metal material)), the carbon footprint of the recycled products (per unit weight of recycled product) can be determined.

The information of the carbon footprint of the recycled products may be stored individually in the target product inventory management database for each attribute of the first metal resource (for example, a supplier). Alternatively, if the information of the carbon footprint of the first metal resource differs based on factors such as the type of the first metal resource even for the same attribute (for example, the same supplier), the information of the carbon footprint of the recycled products may be stored individually in the target product inventory management database for a common unit. Furthermore, even when storing the information of the carbon footprint of the recycled products in units other than an attribute, it is preferable to configure the target product inventory management database so that the information of the carbon footprint of the recycled products can be output by an attribute.

If the information of the carbon footprint of the recycled products includes the information of the carbon footprint of the first metal resource, the information of the carbon footprint of the recycled products will vary depending on an attribute (for example, a supplier) and a type of the first metal resource. By managing the carbon footprint of these recycled products individually, it is possible, for example, to manage the carbon footprint from the first metal resource - by a supplier - through to the manufacturing of the metal materials.

Furthermore, a portion of the target product inventory management database may be configured to be accessible to suppliers of the first metal resource or other parties (for example, parties associated with a specific attribute). For example, by allowing suppliers of the first metal resource or other parties to access the server 210 via a network from the terminal 300, information relevant to such suppliers or other parties (e.g., the amount of the shipment quota of the recycled products for the supplier, the shelf life of the recycled products, and the carbon footprint of the recycled products) may be made available for viewing.

### 6-1. Updating the first metal resource database

As described above, the information regarding the first metal resource sent from the terminal 300 is ultimately sent to the server 210, whether or not it passes through the terminal 220. The server 210 can then update the first metal resource database based on the information regarding the first metal resource.

### 6-2. Calculation of individual shipment quota

In one certain embodiment, based at least on the updated first metal resource database, calculations are performed to determine the shipment quotas for recycled products to be individually assigned for each attribute of the first metal resource (for example, by supplier). The calculation of the shipment quotas may be performed on the server 210 or on the terminal 220. If performed on the terminal 220, the results of the calculation of the shipment quotas may be sent from the terminal 220 to the server 210. Regardless of where the calculation of the shipment quota is performed, based on the results of the calculation of the shipment quotas, the server 210 updates the amount of the shipment quotas of the recycled products assigned to parties associated with an attribute (for example, the supplier subject to the calculation of the shipment quota) in the target product inventory management database.

For example, if the attribute included in the first metal resource database is "supplier," the amount of metal materials manufactured from the first metal resource supplied by a specific supplier is calculated by appropriately considering information identifying the supplier, information identifying the type of the first metal resource, the amount of the first metal resource, and the grade of the metal constituting the metal material (for example, the grade of Cu when manufacturing Cu ingots as a metal material). In this calculation, the yield included in the smelter processing history database may be further considered as necessary. The calculated amount of metal material, or an amount based at least in part on the calculated amount, is then reflected in the shipment quota for the specific party's recycled products.

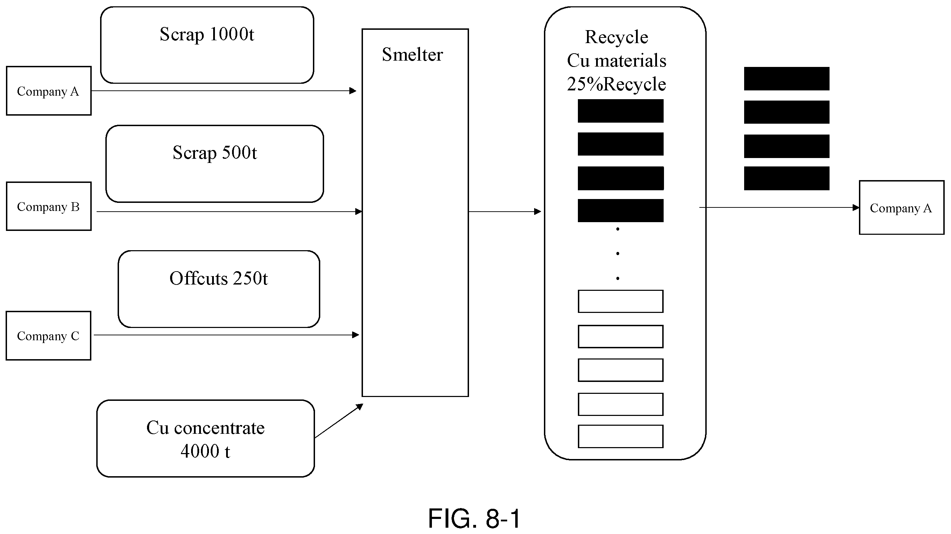

For example, the example in Figure 8-1 shows a case where Company A supplies 1,000 metric tons of scrap. In this case, this information is stored in the first metal resource database. Then, based on this information, the expected amount of the metal materials that will be obtained when Company A's 1,000 metric tons of scrap is input is calculated. For example, in the case of manufacturing copper ingots as a metal material, multiplying the weight of Company A's scrap (1,000 metric tons) by the copper grade of Company A's scrap yields the weight of copper contained in Company A's scrap. For example, if the copper grade of Company A's scrap is 10%, the weight of copper in Company A's scrap would be 100 metric tons. This weight of copper in Company A's scrap may be used directly as the expected amount of the metal materials obtainable from Company A's scrap. Alternatively, the value obtained by multiplying the weight of copper in Company A's scrap by a correction factor may be used as the expected amount of the metal materials. For example, by further considering the yield rates included in the smelter processing history database, the expected amount of the metal materials may be calculated by multiplying the weight of copper in Company A's scrap by the yield rate. Note that the correction factor need not be the same as the yield rate itself. Furthermore, the correction factor may be a uniform value, or it may vary depending on the party in which the shipment quota is set.

Based on the information identifying the attribute included in the first metal resource database, it is determined that Company A is the supplier of the scrap. If the calculated expected amount is 100 t, the target product inventory management database is updated, and Company A's shipment quota can be increased by 100 t.

Note that when considering the yield, the yield may be assumed to be constant regardless of the type or the attribute of the first metal resource. Alternatively, if the yield varies depending on the type or the attribute of the first metal resource, the smelter processing history database may be referred to based on the information identifying the type and/or the attribute of the first metal resource included in the first metal resource database, and the yield for each type or attribute of the first metal resource may be considered.

Furthermore, for a single party (Company A in the above example), it is not mandatory that the calculated expected amount be exactly equal to the shipment quota. While considering various circumstances, the calculated expected amount may be adjusted as appropriate, and the target product inventory management database may be updated with the shipment quota to be newly assigned. However, preferably, the shipment quota should not exceed the calculated expected amount. In any case, the shipment quota described here is an amount that depends at least on the expected amount by which the first metal resource supplied by a specific party is expected to contribute to the manufacture of the metal materials. Furthermore, the shipment quota is the shipment quota for the recycled product accounted for as having been manufactured exclusively from the first metal resource and is assigned to a specific party (Company A in the example of Figure 8-1) among a plurality of parties (Companies A, B, and C in the example of Figure 8-1) (a shipment quota based on the mass balance approach described above).

Furthermore, when receiving the first metal resource from a plurality of parties, it is not necessary to assign shipment quotas for individual recycled products to all the parties associated with a specific attribute (for example, suppliers), and the shipment quota may be assigned to at least one party associated with the specific attribute among all of the parties. For example, in the case illustrated in Figure 8-1, there may be a possibility that Company A has a contractual agreement stipulating the assignment of shipment quotas, whereas Companies B and C do not have such an agreement. In such cases, although Companies A through C respectively supply the first metal resources, the update of each shipment quota may be performed only for Company A.

The recycled product associated with the shipment quota assigned to a party associated with the attribute of a specific first metal resource (for example, a supplier) is shipped only to a party associated with the attribute of the specific first metal resource (for example, the supplier or a party designated by the supplier).

In the example shown in Figure 8-1, the recycled product from the shipment quota assigned to Company A is shipped only to Company A (or a party designated by Company A). In this case, Company A is both the supplier of the first metal resource and a customer of the smelter that receives the recycled products. Since, at the smelter, the first metal resource supplied by Company A is mixed with first metal resources supplied by other parties and the second metal resource to manufacture the metal materials, the metal materials shipped to Company A are not manufactured exclusively from the first metal resource supplied by Company A. However, Company A's shipment quota is calculated based on the amount of the first metal resource supplied by Company A that contributes to the manufacture of the metal material. Therefore, under the concept of the mass balance approach, Company A can receive a supply of 100% recycled product manufactured exclusively from the first metal resource it supplied.

Although it is up to Company A to decide what is manufactured using the recycled products supplied to Company A, if Company A uses the recycled product to manufacture the same product from which the first metal resource Company A supplied originated, then, in theory, horizontal recycling (a recycling system in which a discarded product becomes a resource and is reborn as the same product) can be achieved.

In the above example, the shipment quota can be calculated before the first metal resource is input in the third step. Therefore, the shipment quota will be an amount that depends at least on the expected amount by which the first metal resource contributes to the manufacture of metal materials. However, in another example, the shipment quota may be calculated after the first metal resource is input in the third step, reflecting the actual amount input in the third step. In this case, the shipment quota will be an amount that depends at least on the amount by which the first metal resource contributed to the manufacture of the metal materials. The calculation of the shipment quota after the manufacture of the metal materials is described in detail (see "7-2. Calculation of individual shipment quota").

### 6-3. Calculation of the total shipment quota

In addition to individual shipment quotas (in the example shown in Figure 8-1, the shipment quotas for Companies A, B, and C, respectively), the total shipment quota for recycled products (in the example shown in Figure 8-1, the summed shipment quota for Companies A, B, and C) may also be calculated. Furthermore, similar to the calculation of individual shipment quotas described above, the calculation of the total shipment quota may be performed either on the server 210 or on the terminal 220. If the calculation is performed on the terminal 220, the results of the calculation of the shipment quota may be sent from the terminal 220 to the server 210. Note that when manufacturing the metal materials exclusively from the first metal resource, since all of the metal materials are 100% recycled products, the calculation of this total shipment quota may be omitted. The total shipment quota for the recycled products is calculated when the metal materials are manufactured by combining the first metal resource and the second metal resource, and a portion of the metal materials is treated as 100% recycled products in the mass balance approach.

For example, in the example shown in Figure 8-1, Company A supplies 1,000 metric tons of the scrap, Company B supplies 500 metric tons of the scrap, and Company C supplies 250 metric tons of the offcuts. Information such as the supplied amount of each company is then stored in the first metal resource database. Next, based on this information, the expected amount of the obtainable metal material when the first metal resource supplied by each company is used as inputs is calculated. For example, assuming the manufacture of copper ingots as a metal material, multiplying the weight of Company A's scrap (1,000 metric tons) by the copper grade of Company A's scrap yields the weight of copper contained in Company A's scrap. Similarly, multiplying the weight of Company B's scrap (500 metric tons) by the copper grade of Company B's scrap yields the weight of copper contained in Company B's scrap. Furthermore, as for offcuts supplied by Company C and other materials, the same calculation as for Companies A and B may be performed. However, an alternative method may also be used; for example, if the copper grade of the offcuts supplied by Company C is extremely high, the copper grade may be assumed to be 100%, and the weight of Company C's offcuts - 250 metric tons - may be adopted as the weight of copper.

Using the methods described above, the expected amount of the metal material expected to be obtained from each company's first metal resource is calculated for each company. Next, the expected amount calculated for each company is summed. This allows us to calculate the total expected amount. Furthermore, the total shipment quota can be calculated based at least on the total expected amount.

Furthermore, the total expected amount may be adjusted using an appropriate correction factor, similar to the calculation of individual shipment quotas described above. For example, the yield rates included in the smelter processing history database may be further considered by multiplying the weight of copper in each company's scrap by the yield rate to calculate the expected amount of the metal material for each company.

By managing the total shipment quota, the shipment amount can be controlled so that the shipment amount of the recycled product does not exceed the total shipment quota. For example, in the example describing the individual shipment quotas described above, Company A's shipment quota is calculated. However, while this shipment quota can be used to monitor whether shipments exceeding Company A's quota have occurred, it cannot be used for any other management purposes on its own.

For example, in the example shown in Figure 8-1, it is assumed that the weight of copper in Company A's scrap is 100 metric tons, the weight of copper in Company B's scrap is 50 metric tons, the weight of copper in Company C's offcuts is 250 metric tons, and the weight of copper in the copper concentrate is 1,200 metric tons. In this case, the total expected amount of Cu obtained is 1,600 metric tons, of which 400 metric tons corresponds to the first metal resource (25% recycling). This is set as the total shipment quota. Consequently, the shipment quota assigned to Company A is 100 metric tons.

Furthermore, as an additional assumption, it is assumed that no individual shipment quotas have been set for Company B and Company C (or for any other companies besides Company A through Company C).

In this case, first, of the total shipment quota of 400 metric tons, 100 metric tons are assigned to Company A; therefore, the remaining 300 metric tons constitute the shipment quota for an assignee not specifically designated. Then, within this remaining 300 metric tons, shipments of the recycled products are made to Companies B and C, as well as to companies other than Companies A through C; alternatively, shipments are made to Company A separately from its shipment quota (without changing the amount of Company A's shipment quota).

In this way, by managing the total shipment quota in combination with the individual shipment quota, it is possible to manage the shipment quota not specifically assigned to any specific party and ensure that the total shipment amount of the recycled products does not exceed the total shipment quota for the recycled products defined based on the mass balance approach.

Furthermore, while the above described an example in which shipment quotas for which no specific assignee has been designated are managed as separate information distinct from shipment quotas for which assignees have been designated, the total shipment quota - including those for which assignees have been designated - may also be used as information for managing the shipment amount of the recycled products. In this case, for example, when a shipment is made to Company A, the shipped amount is subtracted from the individual shipment quota (in this example, Company A's shipment quota), and the same amount is also subtracted from the total shipment quota (in this example, the shipment quota based on the total copper amount for Companies A through C) for management purposes. For this reason, the amount of the total shipment quota for the recycled products stored in the target product inventory management database may be the total shipment quota minus the amount of the individual shipment quota for each party associated with an attribute (for example, the supplier), or it may include the amount of the individual shipment quota. Details regarding the shipping process and the subtraction from the shipment quota will be described later.

The calculated individual shipment quota and the total shipment quota may be sent from the server 210 to the terminal 220.

### 6-4. Database management

As described above, various types of information may be managed by a database provided by the server 210 and/or a database accessible by the server 210. Alternatively, it is possible to manage the information on individual terminals; however, managing the information in the database on the server 210 may offer the following advantages.
- Even when a plurality of recipients accept the first metal resource (for example, raw materials for recycling), information regarding the first metal resource can be managed centrally.
- Even if the metal materials are sold from a plurality of sales offices, shipment information is centrally managed on the server 210. This makes it easy to manage the shipment amount within the shipment quota for 100% recycled products.
- Through the server 210, information regarding the shipment quota can be shared with a customer who is both a supplier and a recipient of the first metal resource. This makes it easier for a customer to make a procurement plan and a scrap collection plan.
- It is possible to accommodate a customer request for closed-loop horizontal recycling. For example, in the example of Figure 8-1, the first metal resource supplied by Company A (e.g., raw materials for recycling) can be returned to Company A as the metal material originating from Company A (e.g., 100% recycled products) under the concept of the mass balance approach.
- It enables clear traceability from the first metal resource to the manufacture of the metal material. This also makes easy the management of the carbon footprint, which will be discussed later.

### 7. Updating manufacturing data

### 7-1. Updating manufacturing data

After performing the third step described above, actual manufacturing data can be input via the terminal 220. The information regarding the input actual manufacturing data can then be sent from the terminal 220 to the server 210. The server 210 may update the smelter processing history database based at least on the received information. Furthermore, the server 210 may update the target product inventory management database based at least on the received information.

Updates to the smelter processing history database may include one or more of the following: the yield for the current smelting process; an actual input amount of the first metal resource for each attribute (for example, a supplier); a total actual input amount of the first metal resource; an actual input amount of the second metal resource; energy required for processing (including the carbon footprint); and other actual material usage.

Updates to the target product inventory management database may include one or more of the following: information identifying the source of the first metal resource; the carbon footprint of the recycled products; an amount of the manufactured metal material; the shelf life of the manufactured recycled product; and the carbon footprint associated with the third step.

Information identifying the source of the first metal resource may be updated based on data from the first metal resource database. The carbon footprint associated with the third step may be calculated as a value per unit weight of the metal material by dividing the carbon footprint incurred during the smelting process of the metal material (which, in some cases, may further include the carbon footprint incurred during pretreatment) by the weight of the manufactured metal material.

The carbon footprint incurred in the third step may be the actual value at that time; however, it is preferable to use the average value over a specific past period (for example, the past one year).

### 7-2. Calculation of individual shipment quota

In other embodiments, the shipment quota may be calculated using a method different from that described in "6-2. Calculation of individual shipment quota."

In the shipment quota calculation described in "6-2. Calculation of individual shipment quota," the shipment quota was calculated based on the first metal resource database, and based on the expected amount by which the first metal resource is expected to contribute to the manufacture of the metal material. In other embodiments, as described below, after performing the third step described above, the shipment quota is calculated based on the amount by which the first metal resource contributed to the manufacture of the metal material.

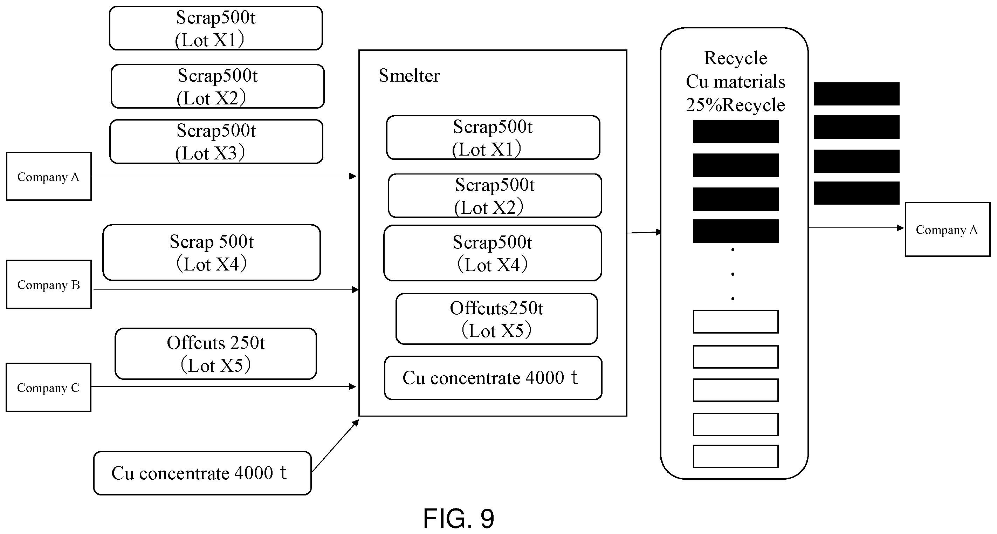

This will be described using the example shown in Figure 9. In any of the aforementioned databases (for example, the first metal resource database), the first metal resource database may manage the lots of the first metal resource supplied. For example, as shown in Figure 9, even if the attribute is the same (e.g., a supplier), the first metal resource is typically supplied multiple times. Therefore, if the first metal resource is supplied three times by the same Company A, a lot may be assigned to each supply (X1 - X3).

Furthermore, when updating the smelter processing history database regarding actual manufacturing data, information regarding which lot of the first metal resource was used in the current manufacture may be recorded. For example, in the case shown in Figure 9, it may be recorded that first metal resources from lots X1, X2, X4, and X5 were used.

Furthermore, when updating the inventory management database for target products, it may be recorded which lot of the first metal resource the target metal material originates from. For example, the metal material (Cu material) manufactured as shown in Figure 9 partially originates from the first metal resource supplied by Company A. In this case, Company A has supplied the first metal resources from lots X1 - X3, and among these, lots X1 and X2 have contributed to the manufacture of the metal material. Therefore, information regarding lots X1 and X2 is obtained from the first metal resource database (for example, the amount of the first metal resource, the metal grade, etc.), and the amount contributed by lots X1 and X2 is calculated. Similarly to the case shown in Figure 8-1, if the copper grade in Company A's scrap is assumed to be 10%, the amount contributed by lots X1 and X2 - that is, the weight of copper in Company A's scrap - is 100 metric tons. This weight of copper in Company A's scrap may be taken directly as the amount of the metal material obtained from Company A's scrap (or the amount by which Company A's scrap contributed to the manufacture of the metal material). Alternatively, the value obtained by multiplying the weight of copper in Company A's scrap by a correction factor may be used as the amount contributed to the manufacture of the metal material. For example, the yield included in the smelter processing history database may be further considered, and the amount of the manufactured metal material may be calculated by multiplying the weight of copper in Company A's scrap by the yield rate. The correction factor may, for example, be a uniform value, a value that differs for each company, a value that differs for each delivery lot of the first metal resource, or a value that differs for each manufacture lot of the metal material.

After calculating that the amount contributing to the manufacture of the metal material is 100 metric tons, the target product inventory management database can be updated to increase Company A's shipment quota by 100 metric tons. Furthermore, when calculating the shipment quota, some of the methods described in "6-2. Calculation of individual shipment quota" may be applied (for example, the point that it is not mandatory for the calculated expected amount to be exactly equal to the shipment quota; or the point that when receiving the first metal resource from a plurality of the parties, it is not necessary to assign the individual shipment quotas for the recycled products to all parties associated with the attribute (e.g., all suppliers)).

### 7-3. Calculation of the total shipment quota

Furthermore, it is possible to calculate not only the individual shipment quota (in the example shown in Figure 9, the summed quotas corresponding to Company A's lots X1 and X2, Company B's lot X4, and Company C's lot X5, respectively) but also the total shipment quota (in the example shown in Figure 9, the summed quota corresponding to Company A's lots X1 and X2, Company B's lot X4, and Company C's lot X5). Furthermore, similarly to the calculation of the individual shipment quota described above, the calculation of the total shipment quota may be performed either on the server 210 or on the terminal 220. If the calculation is performed on the terminal 220, the results of calculation of the shipment quota may be sent from the terminal 220 to the server 210.

For example, in the example shown in Figure 9, Company A supplies 1,500 metric tons of scrap (lots X1, X2, and X3), Company B supplies 500 metric tons of scrap (lot X4), and Company C supplies 250 metric tons of offcuts (lot X5). Information such as the amount of the supply from each company is then stored in the first metal resource database. Next, after the metal material is manufactured, information regarding which lot of the first metal resource was used in the current manufacture may be recorded in the smelter processing history database. For example, in the example shown in Figure 9, the record that the first metal resources from lots X1, X2, X4, and X5 were used may be stored. Based on this information, it is calculated how much metal material was obtained when the first metal resources supplied by each company were input. For example, assuming the manufacture of copper ingots as the metal material, multiplying the weight of Company A's scrap (1,000 metric tons, lots X1 and X2) by the copper grade of Company A's scrap yields the weight of copper contained in Company A's scrap (Lots X1 and X2). Similarly, multiplying the weight of Company B's scrap (500 metric tons) by the copper grade of Company B's scrap (lot X4) yields the weight of copper contained in Company B's scrap. Similarly, for offcuts supplied by Company C and other materials, the same calculation used for Companies A and B may be applied. However, another method may also be used; for example, if the copper grade of the offcuts provided by Company C is extremely high, the copper grade may be assumed to be 100%, and the weight of Company C's offcuts - 250 metric tons - may be adopted as is.

Using the methods described above, the amount for each company indicating how much metal material was obtained from the first metal resources supplied by each company (in other words, the amount of the contribution to the manufacture of the metal material) is calculated. Next, the amount of the contribution calculated for each company is summed. This allows the total amount of the contribution to be calculated. Furthermore, the total shipment quota can be calculated based at least on the total amount of the contribution.

Furthermore, by considering the yield included in the smelter processing history database, the amount of the contribution of each company's metal material may be calculated by multiplying the weight of copper in each company's scrap by the yield rate.

The significance of the total shipment quota is the same as described in the description of Figure 8-1 (see "6-3. Calculation of the total shipment quota").

The calculated individual shipment quota and the total shipment quota may be sent from the server 210 to the terminal 220.

Note that regarding the shipment quota calculations described in "6-2. Calculation of individual shipment quota" and "6-3. Calculation of the total shipment quota," as well as those described in "7-2. Calculation of individual shipment quota" and "7-3. Calculation of the total shipment quota," it is permissible to perform only the former, only the latter, or both. If both are performed, the shipment quota calculation described in the former may be treated as a provisional shipment quota.

### 8. Obtaining information of shipment quota (the fourth step and other steps)

After the server 210 calculates the individual shipment quotas using the method described above, the terminal 220 can receive information regarding the individual shipment quota. This allows terminal 220 to confirm the individual shipment quota generated by the current smelting process. Furthermore, the terminal 220 can verify information regarding past individual shipment quotas and/or shipment quotas that are the sum of the past individual shipment quotas and the individual shipment quotas generated by the current smelting process. For example, in the example shown in Figure 2, assuming that the yield is 100% and that all of the amount of the supplied Cu is reflected in the shipment quota, the amount of the 100 metric tons is associated with Company A and constitutes the individual shipment quota generated by the current smelting process.

Furthermore, the terminal 220 can receive information regarding the total shipment quota, which includes the shipment quota for the recycled products not assigned to an individual supplier. This allows the terminal 220 to verify the total shipment quota. In the example shown in Figure 2, assuming that the yield is 100% and that all of the amount of the supplied Cu is reflected in the shipment quota, the total shipment quota resulting from the current smelting process would be 250 metric tons - the sum of the Cu supplied by Companies A through C.

To reiterate, as mentioned above, the shipment quota is not for the partially recycled products as shown in Figure 2, but rather for the 100% recycled products as shown in Figure 3 (i.e., the recycled product accounted for as having been manufactured exclusively from the first metal resource).

### 9. Shipping process (the fifth step and the sixth step)

After manufacturing the metal materials, the smelter can ship the recycled products in response to an order from a customer. On receiving an order and/or on shipping, the terminal 220 may send order information and/or shipment information to the server 210. Alternatively, regarding orders, the terminal 300 may access the server 210 to send order information directly. In that case, the server 210 may send the order information to the terminal 220. The user of the terminal 220 can then confirm the content of the order.

On receiving the order information and/or the shipment information, the server 210 may update the target product inventory management database. For example, the server 210 may update information indicating that the order has been assigned to a portion of the shipment quota for the recycled products, and/or information indicating that the order has been shipped.

On receiving the order information and/or the shipment information, the server 210 may update the target product inventory management database. Then, for example, the server 210 may execute a process to reduce the shipment quota held by the customer who is the target of the shipment, in accordance with the amount of the metal material shipped as the recycled product.

Separate from the order information and/or the shipment information, information regarding the updated shipment quota - calculated by subtracting the amount of the shipment of the recycled products from the shipment quota - may be sent from the terminal 220 to the server 210, and the server 210 may use this information to update the target product inventory management database. Such updated information of the shipment quota can also be regarded, in a broad sense, as information regarding the shipment of the recycled products, in that it reflects the shipment amount of the recycled products.

For example, it is assumed that Company A has a shipment quota of 500 metric tons and is scheduled to receive the shipment of the metal materials as the recycled product in the form of 100 metric tons of ingots X 4. In this case, 400 metric tons can be subtracted from Company A's existing shipment quota of 500 metric tons.

If the information on the total shipment quota for the recycled products includes the customer's shipment quota updated as described above, a similar process is performed as well, a process of subtracting the amount of the shipment of the recycled products from the total shipment quota for the recycled products.

Note that the process of subtracting the shipment quota is not necessarily performed whenever the order information and/or the shipment information is received; it may be configured to be performed only for parties with whom such contracts have been established. Therefore, for example, information indicating whether to perform an increase/reduce process for the shipment quota may be stored in the target product inventory management database. Furthermore, when the server 210 receives the order information and/or the shipment information, it may access the target product inventory management database to determine whether to perform the increase/reduce process for the shipment quota. Furthermore, only if it is determined that the increase/reduce process for the shipment quota should be performed, the above-described increase/reduce process for the shipment quota may be performed.

The same applies when the first metal resource is received; it may access the target product inventory management database to determine whether to perform the increase/reduce process for the shipment quota.

### 10. Other processes, etc.

In addition to the processing described above, the method according to one embodiment of the present disclosure may further include a step in which the terminal 220 receives, from the server 210, information regarding the carbon footprint of the recycled products which is assigned to a specific one among a plurality of parties. This allows the user of the terminal 220 to verify the carbon footprint information of the manufactured metal materials (and, furthermore, the metal materials to be shipped). In some cases, the metal materials can be shipped to a customer with the carbon footprint information attached at the time of shipment. Alternatively, as described above, a portion of the target product inventory management database may be configured so that the terminal 300, which belongs to the supplier of the first metal resource or another party (for example, a party associated with a specific attribute), can access it, allowing the customer who is the target of the shipment (for example, the supplier of the first metal resource or another party) to obtain the carbon footprint information for their own recycled products.

In one embodiment, the present disclosure relates to a method for manufacturing recycled products to which carbon footprint information for the recycled products has been attached.

In a further embodiment, the method of the present disclosure may further include a step of receiving, by the terminal 220, information regarding the carbon footprint of the first metal resource. Alternatively, the source of the carbon footprint information for the first metal resource may be the server 210 or the terminal 300. If the server 210 is the source, the server 210 may have previously obtained, from the terminal 300, information regarding the first metal resource including the carbon footprint information; for example, it may obtain the carbon footprint information for the first metal resource from the first metal resource database and send it to the terminal 220. If the terminal 300 is the source, for example, the terminal 220 may obtain the information regarding the first metal resource including carbon footprint information (e.g., via email or other means), and then, the terminal 220 may send the information regarding the first metal resource including carbon footprint information, to the server 210. The server 210 may then update the first metal resource database and store the information regarding the first metal resource including the carbon footprint information.

In a further embodiment, the method of the present disclosure may further include a step of receiving, by the terminal 220 from the server 210, the information regarding the carbon footprint of the first metal resource and/or information regarding the carbon footprint associated with the third step. The carbon footprint information associated with the third step may be the information based on the carbon footprint values associated with the third step, as described in the section "7. Updating manufacturing data."

The server 210 may derive carbon footprint information of the manufactured metal materials (and, furthermore, metal materials to be shipped) based at least on the carbon footprint information of the first metal resource and the carbon footprint information associated with the third step. Furthermore, the server 210 may calculate the carbon footprint information for the manufactured metal materials (and, furthermore, the metal materials to be shipped) by attribute of the first metal resource (for example, by a supplier). For example, the carbon footprint information for the metal material may be calculated as if it were manufactured exclusively from the first metal resource having a specific attribute (e.g., supplied by a specific supplier). In such cases, the carbon footprint information for the metal material may be calculated using the carbon footprint information of the first metal resource having the specific attribute.

In one embodiment, the carbon footprint of the first metal resource may be managed by a supplier. For example, as for the metal material accounted for as having been manufactured exclusively from the first metal resource having the specific attribute, the amount of the carbon footprint associated with the first metal resource having the specific attribute may be assigned to the metal material. Furthermore, the specific attribute may be a specific supplier of the first metal resource.

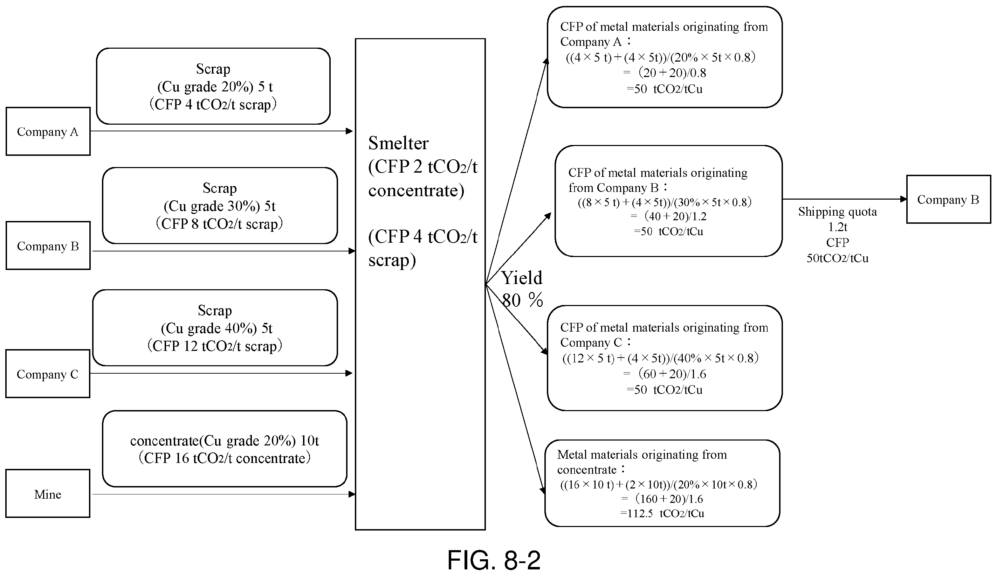

Figure 8-2 shows the flow for managing the amount of the carbon footprint for each supplier. All of Companies A, B, and C are companies engaged in scrap processing.

The carbon footprint of scrap originating from Company B is 8 metric tons of CO₂ equivalent per metric ton of scrap. Furthermore, 5 metric tons of scrap are supplied. Therefore, the total CO₂ emissions from the scrap originating from Company B are 40 metric tons of CO₂ (8 metric tons of CO₂ per metric ton of scrap X 5 metric tons). In addition, during processing at the smelter, a carbon footprint equivalent to 4 metric tons of CO₂ is added for processing one metric ton of scrap. Consequently, the CO₂ emissions generated when processing all the scrap from Company B at the smelter are 20 metric tons of CO₂ (4 metric tons of CO₂ per metric ton of scrap X 5 metric tons). Consequently, when the metal materials are manufactured from all the scrap originating from Company B, the CO₂ emissions associated with those metal materials are 60 metric tons of CO₂. Furthermore, assuming yield is 80%, the amount of the metal materials obtained from the total 5 metric tons of the scrap originating from Company B is 1.2 metric tons (the amount of the scrap X the copper grade X yield: 5 metric tons X 30% X 80%). Therefore, the carbon footprint of the metal material originating from Company B is 50 t CO₂ / t Cu (60 t / 1.2 t).

Applying the same calculation to determine the carbon footprint of the metal materials originating from the other suppliers yields the following results:
- From Company A: 50 t CO₂ /tCu
- From Company B: 50 t CO_{2 /}tCu
- From Company C: 50 t CO₂ /tCu
- From concentrate: 112.5 t CO₂ /tCu

Furthermore, when calculated for the total metal materials regardless of the suppliers, the results are as follows. First, the total amount of the metal material obtained is 5.2 metric tons (0.8 + 1.2 + 1.6 + 1.6 = 5.2). The total CO₂ emissions are 360 metric tons of CO₂ ((20 + 20) + (40 + 20) + (60 + 20) + (160 + 20) = 360). Therefore, the carbon footprint per unit weight is 69 t CO₂ /tCu.

For example, if 1.2 metric tons are shipped to Company B, the CO₂ emissions for the metal materials are 82.8 metric tons of CO₂ (1.2 t X 69 t of CO₂ /tCu). However, as described above, based on the mass balance approach, 1.2 metric tons of metal material shipped to Company B can be treated as having been manufactured exclusively from the scrap originating from Company B. Based on this treatment, the CO₂ emissions from the metal material are 60 metric tons of CO₂ (1.2 t X 50 t CO₂ /tCu).

In another embodiment, the method of the present disclosure may include a step of sending, to the server 210, information regarding the carbon footprint of the recycled product assigned to a specific one among a plurality of parties. For example, the carbon footprint information for the manufactured metal material (and furthermore the metal material to be shipped) may be derived on the terminal 220 rather than on the server 210. The information and processing required for deriving may be the same as in the case of the server 210. After deriving the information, the terminal 220 can send the carbon footprint information for the manufactured metal material (and furthermore, the metal materials to be shipped) to the server 210. The server 210 may update the database (for example, the target product inventory management database) based on the sent information.

### 11. Examples of variations of the embodiment

In the above-described embodiment, in the fourth step, the terminal receives, from the server, information regarding the first shipment quota of the recycled product accounted for as having been manufactured exclusively from the first metal resource, the first shipment quota being assigned to a specific party among a plurality of parties. Furthermore, the first shipment quota depends on the amount of the first metal resource supplied by a specific party that contributed to, or is expected to contribute to, the manufacture of the metal materials in the third step.

However, the above-described embodiment may be modified to various embodiments. For example, the fourth step may be modified so that the recycled product is accounted for as having been manufactured exclusively from the first metal resource, based on a specific attribute such as specific use, location, or manufacturer from which the first metal resource originated. Furthermore, the fourth step may be modified so that the first shipment quota depends on an amount by which the first metal resource having the specific attribute has contributed, or is expected to contribute, to the manufacture of the metal materials in the third step. Similarly, such modifications are also possible for the calculation of the amount of the carbon footprint. Specific examples are described below.

### 11-1. Management for each use

### 11-1-1. Management of the amount of recycling for each use

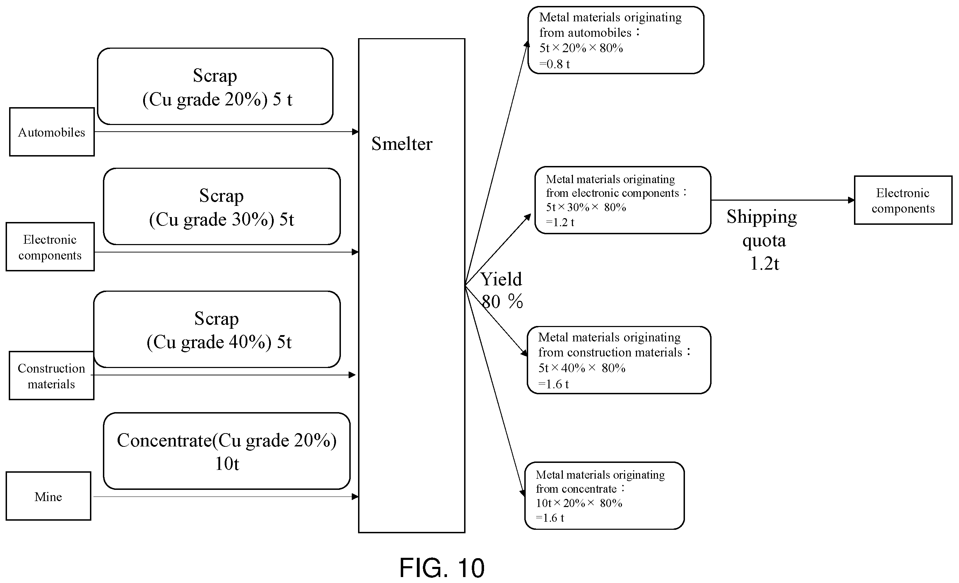

Figure 10 illustrates an example in which a metal material (for example, copper ingots, as described above) is manufactured from the first metal resource originating from a specific usage, and then shipped to a party associated with that same usage (for example, a party that procures the metal material to manufacture products for the same usage). Specifically, the following three types of scrap are supplied to the smelter:
- 5 metric tons of scrap originating from automobiles (Cu grade 20%)
- 5 metric tons of scrap originating from electronic components (Cu grade: 30%)
- 5 metric tons of scrap from construction materials (Cu grade 40%)

In addition, 10 metric tons of concentrate from the mine (Cu grade 20%) are supplied to the smelter.

Since yield is 80%, the metal materials obtained from each source are as follows:
- Automobiles: 0.8 metric tons
- Electronic components: 1.2 metric tons
- Construction materials: 1.6 metric tons
- Concentrate: 1.6 metric tons

Therefore, a total of 5.2 metric tons of the metal materials is obtained. Of this, 3.6 metric tons originate from recycling, of which 1.2 metric tons originate from electronic components. Therefore, the recycled content ratio for total metal material is 69% (3.6 t / 5.2 t X 100), and the recycled content ratio for the portion originating from electronic components relative to the total metal materials is 23% (1.2 t / 5.2 t X 100). Consequently, if 1.2 metric tons of the metal material are shipped for use in electronic components, 0.28 metric tons (1.2 t X 23%) will be a portion originating from the electronic components.

However, under the mass balance approach, 1.2 metric tons of the metal material shipped for use in electronic components can be treated in its entirety as originating from electronic components.

In Figure 10, 1.2 metric tons of the metal material have been shipped. However, there is an upper limit to the amount of the metal material that can be shipped as the recycled metal material originating from 100% electronic components. Here, as described above, a total of 5.2 metric tons of the metal material was obtained, of which 1.2 metric tons originated from electronic components. Therefore, 1.2 metric tons is the upper limit of the shipment quota. Furthermore, when the metal material is shipped for use in electronic components, the system and/or information processing terminal described above execute processing for subtracting the shipped amount from the shipment quota. For example, if 0.5 metric tons are shipped for use in electronic components, 0.5 metric tons are subtracted from 1.2 metric tons of the shipment quota, resulting in 0.7 metric tons of the remaining shipment quota. Furthermore, if the metal material is further shipped for electronic components, processing for further subtracting from the remaining shipment quota is executed.

Adopting the above system can contribute to the realization of horizontal recycling (for example, using used products as raw materials to newly manufacture the same products).

Examples of usage are not limited to any specific category, but include automotive parts, electronic components, and construction materials; examples of electronic components include wire harnesses.

### 11-1-2. Management of carbon footprint (CFP) for each use

In addition to, or as an alternative to, managing the amount of recycling for each use as described above, management for the amount of the carbon footprint for each use may be performed. For example, as for the metal material accounted for as having been manufactured exclusively from the metal resource having the specific attribute, the amount of the carbon footprint associated with the metal resource having the specific attribute may be assigned.

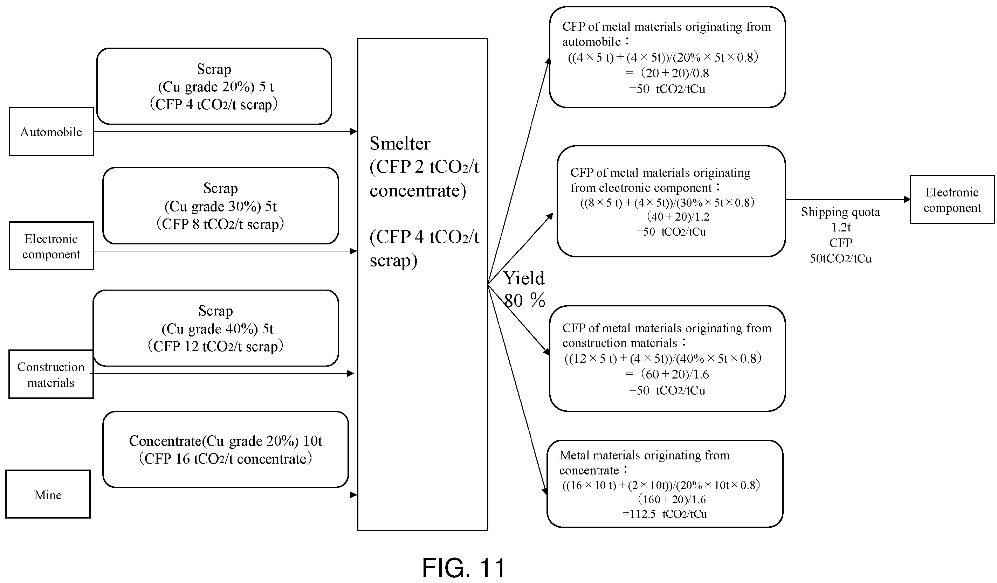

Figure 11 shows a similar configuration to Figure 10, but includes additional information regarding the amount of the carbon footprint.

The amount of the carbon footprint for the scrap originating from electronic components is 8 metric tons of CO₂ equivalent per metric ton of scrap. Furthermore, 5 metric tons of scrap are supplied. Therefore, the total CO₂ emissions from scrap originating from electronic components are 40 metric tons of CO₂ (8 t CO₂ / t scrap X 5t). In addition, during processing at the smelter, the amount of the carbon footprint equivalent to 4 metric tons of CO₂ is added for processing one metric ton of scrap. Consequently, the CO₂ emissions generated when processing all of the scrap originating from electronic components at the smelter are 20 t CO₂ (4 t CO₂ /t scrap X 5 t). Therefore, if the metal material is manufactured from the total scrap originating from electronic components, the CO₂ emissions associated with the metal material are 60 metric tons of CO₂. Furthermore, assuming that yield is 80%, the amount of the metal material obtained from the total 5 metric tons of the total scrap originating from electronic components is 1.2 metric tons (the amount of the scrap X the copper grade X yield: 5 metric tons X 30% X 80%). Therefore, the amount of the carbon footprint of the metal material originating from electronic components is 50t CO₂ /tCu (60 t / 1.2 t) per unit weight.

Applying the same calculation to determine the carbon footprint of metal materials originating from other sources yields the following results:
- From automobiles: 50 t CO₂ /tCu
- From electronic components: 50 t CO₂ /tCu
- From construction materials: 50 t CO₂ /tCu
- From concentrates: 112.5 t CO₂ /tCu

Furthermore, when calculated for the total metal materials regardless of usage, the results are as follows. First, the total amount of metal material obtained is 5.2 metric tons (0.8 + 1.2 + 1.6 + 1.6 = 5.2). The total CO₂ emissions are 360 metric tons of CO₂ ((20 + 20) + (40 + 20) + (60 + 20) + (160 + 20) = 360). Therefore, the carbon footprint per unit weight is 69 t CO₂ /tCu.

For example, if 1.2 metric tons are shipped for electronic components usage, the CO₂ emissions for the metal material are 82.8 metric tons of CO₂ (1.2 t X 69t CO₂ /tCu). However, as mentioned above, based on the mass balance approach, 1.2 metric tons of the metal material shipped for electronic component usage can be treated as having been manufactured exclusively from the scrap originating from electronic component usage. Based on this treatment, the CO₂ emissions from the metal material are 60 metric tons of CO₂ (1.2 t X 50 t CO₂ /tCu).

### 11-1-3. Data accompanied by the management of the amount of the carbon footprint (CFP) for each use

To realize the mechanism described above, the first metal resource database may store information regarding usage associated with the first metal resource (for example, the usage of articles prior to the manufacture of the first metal resource), in addition to the items described above (see "6. Data processing associated with obtaining the first metal resource"). Furthermore, it may store information regarding the amount of the carbon footprint for each use associated with the first metal resource.

The target product inventory management database may be configured to store, in addition to the items described above (see "6. Data processing associated with obtaining the first metal resource"), information regarding one or more of the following: (A) the carbon footprint of the first metal resource for each use of the articles from which the first metal resource originates; (B) the amount of the shipment quota for the recycled product for each use of the articles from which the first metal resource originates; (C) the carbon footprint of the recycled product for each use of the articles from which the first metal resource originates; etc. For example, in the example shown in Figure 11, as for the shipped recycled product, (B) the amount of the shipment quota is 1.2 metric tons, and (C) the carbon footprint of the recycled product is 50 t CO₂ /tCu. Of this, (A) the carbon footprint of the first metal resource for each use of the articles originating from the first metal resource is 8 t CO₂ /t scrap; and this information may be stored.

Furthermore, this information may be processed and/or sent and received by the server 210 and/or the terminal 220 as described above.

For example, the above information may be used to manage the shipping quota for each use. For example, in the example shown in Figure 10, the shipment quota for electronic components is 1.2 metric tons, and the information regarding the amount of this shipment quota may be stored. Furthermore, each time a shipment for electronic components is made, a process may be performed to subtract from the amount of that shipment quota.

In another example, the above information may be used to execute processing to assign, to the shipped metal material, the carbon footprint for each use. For example, in the example shown in Figure 11, the shipment of 1.2 metric tons for electronic components is made, and the carbon footprint corresponding to electronic components is assigned to that shipment.

As for data processing associated with the recycled content ratio, the amount of the carbon footprint, and the shipment quota (for example, an individual shipment quota and/or the total shipment quota) etc., the content described above in "6. Data processing associated with obtaining the first metal resource" and/or "7. Updating manufacturing data" may be applied.

By using the system described above, horizontal recycling can be realized.

### 11-2. Management for each location

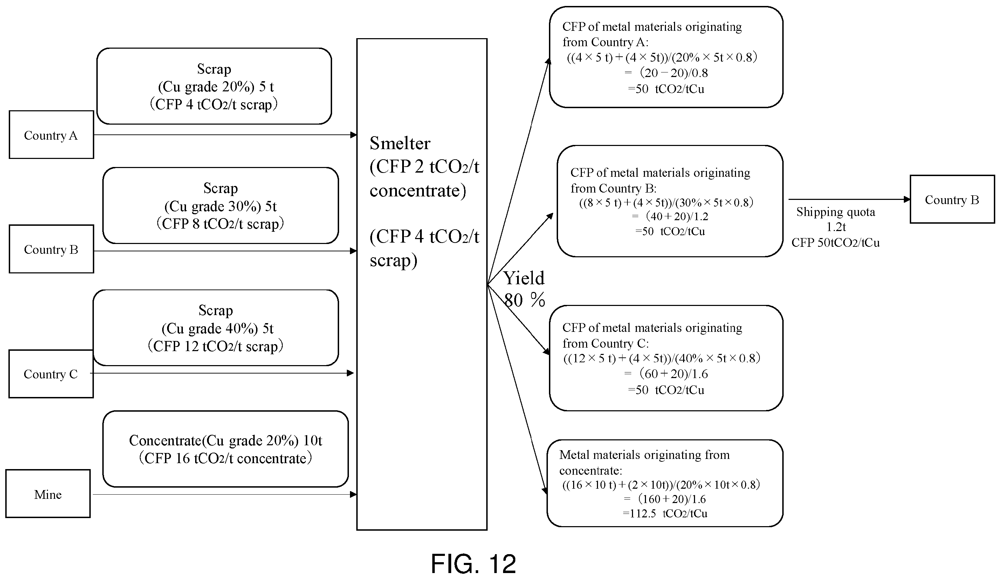

As another example of a modification to the embodiment, the management may be based on location. Figure 12 shows content similar to that in Figure 11. While Figure 11 shows the flow for each use, Figure 12 shows the flow for each country. To facilitate understanding, the calculations and other details have been set to the same values as in Figure 11.

Alternatively, "location" may be at the national level, or it may be at the regional level within a specific country (for example, a state or prefecture). Figure 12 illustrates an example of management for each country as an example of "location."

In Figure 12, a portion of the metal material manufactured from the metal resource including the scrap from Country B is shipped to Country B (for example, to manufacturers etc., within Country B). Furthermore, the metal material shipped to Country B is treated as having been recycled exclusively from Country B's scrap. Furthermore, the amount of the carbon footprint of the metal material shipped to Country B is calculated as if it were manufactured exclusively from Country B's scrap.

To realize the mechanism described above, the first metal resource database may store, in addition to the items described above (see "6. Data processing associated with obtaining the first metal resource"), information regarding locations associated with the first metal resource (for example, the location where the first metal resource is manufactured (for example, the location where scrap is manufactured), or the location, etc., from which articles, waste materials, offcuts, etc., used to manufacture the first metal resource are shipped). Furthermore, the information regarding the amount of the carbon footprint for each location associated with the first metal resource may be stored.

The target product inventory management database may be configured to store, in addition to the items described above (see "6. Data processing associated with obtaining the first metal resource"), information regarding one or more of the following: (A) the carbon footprint of the first metal resource for each location associated with the first metal resource; (B) the amount of the shipment quota of the recycled product for each location associated with the first metal resource; (C) the carbon footprint of the recycled product for each location associated with the first metal resource; etc. For example, in the example shown in Figure 12, regarding the recycled product shipped, (B) the amount of the shipment quota is 1.2 metric tons, and (C) the carbon footprint of the recycled product is 50 t CO₂ /t Cu. Of this, (A) the carbon footprint for each location from which the first metal resource originates is 8 t CO₂ /t scrap, and this information may be stored.

Furthermore, this information may be processed by the server 210 and/or the terminal 220 described above, and/or sent and received.

For example, the above information may be used to manage the shipment quota for each location. For example, in the example shown in Figure 12, the shipment quota for Country B is 1.2 metric tons, and the information regarding the amount of this shipment quota may be stored. Furthermore, each time a shipment to Country B is made, a process may be performed to subtract from the amount of that shipment quota.

In another example, the above information may be used to execute processing to assign, to the shipped metal material, the carbon footprint for each location. For example, in the example shown in Figure 12, the shipment of 1.2 metric tons for Country B is made, and the carbon footprint corresponding to Country B is assigned to that shipment.

As for data processing associated with the recycled content ratio, the amount of the carbon footprint, and the shipment quota (for example, an individual shipment quota and/or the total shipment quota) etc., the content described above in "6. Data processing associated with obtaining the first metal resource" and/or "7. Updating manufacturing data" may be applied.

Adopting the above mechanism makes it possible to promote certain domestic resource circulation.

### 11-3. Management for each manufacturer from which the first metal resource originates

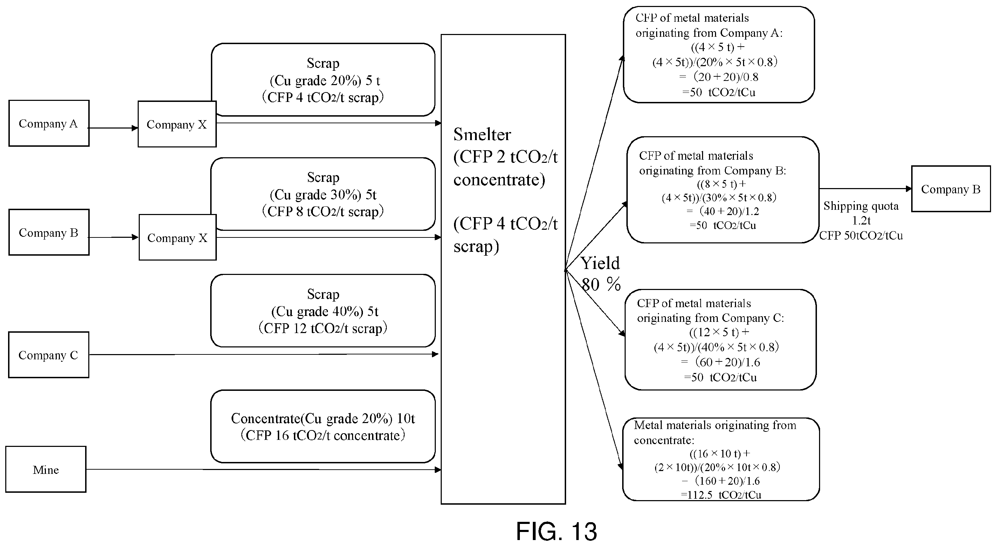

As another example of a modification to the embodiment, the management may be based on a manufacturer from which the first metal resource originates. Note that the term "manufacturer from which the first metal resource originates" used herein refers to a manufacturer of an article from which the first metal resource originates. In Figure 13, described below, Manufacturer A and Manufacturer B are the manufacturers from which the first metal resource originates, whereas Company X, which processes scrap, is not a manufacturer from which the first metal resource originates. Figure 13 presents content similar to that shown in Figures 11 and 12. Figure 11 shows the flow for each use, Figure 12 shows the flow for each country, and Figure 13 shows the flow for each manufacturer. To facilitate understanding, the calculation methods and other details have been set to the same value as in Figure 11.

For example, Manufacturer A requests Company X to process its products into scrap. Similarly, Manufacturer B also requests Company X to process its products into scrap. Manufacturer C processes its own products into scrap in-house. These scraps are shipped to the smelter, where they are processed into the metal material.

Note that in Figures 8-1 through 9 and the related embodiments described above, the recycled content ratio, the amount of carbon footprint etc., are managed according to the supplier of the first metal resource. In Figure 13, the supplier of the first metal resource is a party that supplies a metal resource either directly or indirectly (for example, Company A, Company B, Company C, and Company X). On the other hand, a manufacturer of articles is a party that manufactures articles, etc., prior to their processing into the first metal resource (for example, Company A, Company B, Company C).

In Figure 13, a portion of the metal material manufactured from the first metal resource which includes scrap made from Company B's product is shipped to Company B. Furthermore, the metal material shipped to Company B is treated as having been recycled exclusively from the scrap made from Company B's product. Furthermore, the amount of the carbon footprint of the metal material shipped to Company B is calculated as if it were produced exclusively from the scrap made from Company B's product.

To realize the mechanism described above, the first metal resource database may store, in addition to the items described above (see "6. Data processing associated with obtaining the first metal resource"), information identifying the manufacturer from which the first metal resource originates. Furthermore, the information regarding the amount of the carbon footprint for each manufacturer from which the first metal resource originates may be stored.

The target product inventory management database may be configured to store, in addition to the items described above (see "6. Data processing associated with obtaining the first metal resource"), information regarding one or more of the following: (A) the carbon footprint of the first metal resource for each manufacturer from which the first metal resource originates; (B) the amount of the shipment quota of the recycled product for each manufacturer from which the first metal resource originates; (C) the carbon footprint of the recycled product for each manufacturer from which the first metal resource originates; etc. For example, in the example shown in Figure 13, regarding the recycled product shipped, (B) the amount of the shipment quota is 1.2 metric tons, and (C) the carbon footprint of the recycled product is 50 t CO₂ /tCu. Of this, (A) the carbon footprint for each manufacturer from which the first metal resource originates is 8 t CO₂ /t scrap, and this information may be stored.

Furthermore, this information may be processed by the server 210 and/or the terminal 220 described above, and/or sent and received.

For example, the above information may be used to manage the shipment quota for each manufacturer of articles associated with the first metal resource. For example, in the example shown in Figure 13, the shipment quota for Manufacturer B is 1.2 metric tons, and the information regarding the amount of this shipment quota may be stored. Furthermore, each time a shipment to Manufacturer B is made, a process may be performed to subtract from the amount of that shipment quota.

In another example, the above information may be used to execute processing to assign, to the shipped metal material, the carbon footprint for each manufacturer of the article. For example, in the example shown in Figure 13, the shipment of 1.2 metric tons for Company B is made, and the carbon footprint corresponding to Company B is assigned to that shipment.

As for data processing associated with the recycled content ratio, the amount of the carbon footprint, and the shipment quota (for example, an individual shipment quota and/or the total shipment quota) etc., the content described above in "6. Data processing associated with obtaining the first metal resource" and/or "7. Updating manufacturing data" may be applied.

Adopting the above mechanism makes it possible to promote a closed-loop resource circulation within a specific manufacturer.

### 11-4. Management for each attribute combination

In the embodiments described above, management is performed for each supplier, each use, each location, and each manufacturer from which the first metal resource originates. Management may also be performed based on any combination of these four elements. For example, management may be performed based on the manufacturer from which the first metal resource originates and based on a specific use. For example, if the manufacturer is an automobile manufacturer, and if the supplied scrap includes the one originating from sheet metal and the one originating from engine parts, it may be managed separately. In this case, shipment quota management and carbon footprint amount calculation may be performed for each combination of the manufacturer (from which the first metal resource originates) and the specific use. In another example, when the supplier of the first metal resource ships the first metal resource originating from a plurality of countries, management may be performed for each combination of the supplier of the first metal resource and the country.

### 11-5. Manufacturing of the metal material from the first metal resource

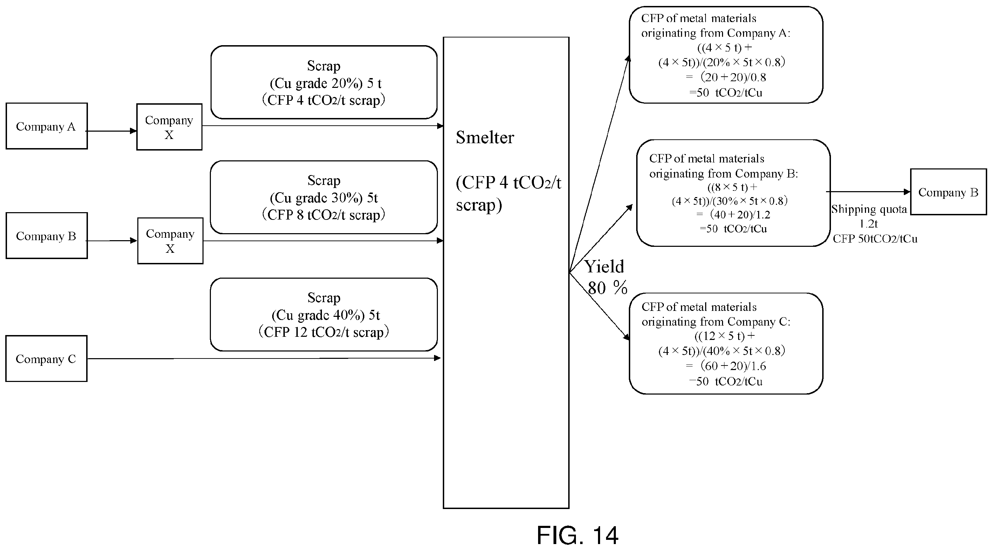

In the embodiments described above, the second metal resource is supplied to the smelter. However, in some embodiments, the supply of the second metal resource may be omitted, and the metal material may be manufactured exclusively from the first metal resource. Figure 14 illustrates an embodiment similar to that shown in Figure 13. However, the embodiment shown in Figure 14 differs from that shown in Figure 13 in that concentrate from the mine is not supplied to the smelter.

Similarly, in the embodiments shown in Figures 2 through 3 and Figures 8-1 through 12, the supply of the second metal resource may be omitted, and the metal material may be manufactured exclusively from the first metal resource.

When the metal material is manufactured exclusively from the first metal resource, the metal material is 100% recycled product. However, even among a plurality of 100% recycled products, a different attribute may be assigned to each of them based on the mass balance approach, depending on a specific attribute of the first metal resource.

For example, in the example shown in Figure 14, if the shipment is modified to include not only Company B but also Company A, the 100% recycled product will be supplied to both Company A and Company B. However, under the mass balance approach, the 100% recycled product supplied to Company A can be assigned an attribute originating from Company A (within the upper limits of the shipment quota). Similarly, the 100% recycled product supplied to Company B can be assigned an attribute originating from Company B.

The detailed embodiments of the present invention have been described. The above embodiments are merely an example, and the present invention is not limited to the above embodiments. For example, a technical feature disclosed in one of the above embodiments may be applied to another embodiment. Furthermore, unless indicated specifically, regarding a particular method, some steps may be switched with the order of some other steps, and further steps may be inserted between certain two steps. The scope of the present invention is defined by the appended claims.

### Potential Contribution to the SDGs

According to one embodiment of the present invention, it may be possible to promote the use of metal materials with low CFP. This may lead to a reduction in the impact of climate change. Therefore, one embodiment of the present disclosure may contribute to Goal 13, "Take urgent action to combat climate change and its impacts," and/or Goal 12, "Ensure sustainable consumption and production patterns," of the United Nations-led Sustainable Development Goals (SDGs).

### [Explanation of Symbols]

100 Information processing device
110 Processor
120 Memory
130 Non-transient storage media
140 Communication module
200 System
210 Server
220 Terminal
300 A terminal of a party associated with a specific attribute (for example, the first metal resource supplier or another party)

## Claims

1. A method for managing recycling of metal resources,
the method comprising:
(A) a first step of obtaining a first metal resource provided by a plurality of parties, wherein the first metal resource is a used article intended for recycling or offcuts or waste material generated during a manufacturing process of the article;
(B) optionally, a second step of obtaining a second metal resource, wherein the second metal resource originates from minerals;
(C) a third step of manufacturing a metal material using a raw material, wherein the raw material includes the first metal resource obtained in the first step, and the raw material may also include the second metal resource obtained in the second step;
(D) a fourth step of receiving information, by a terminal from a server, wherein the information is regarding a first shipment quota for a recycled product that is accounted for as having been manufactured exclusively from the first metal resource having a specific attribute among the first metal resources obtained in the first step, and wherein the first shipment quota depends on an amount by which the first metal resource having the specific attribute contributed, or is expected to contribute, to the manufacture of the metal material in the third step;
(E) a fifth step of shipping the metal material as the recycled product to a party associated with the specific attribute; and
(F) a sixth step of sending, by the terminal, information regarding the shipment in the fifth step to the server and causing the server to update the information regarding the first shipment quota stored in the server so that the first shipment quota is subtracted by an amount of the recycled product subject to the shipment.

2. The method according to claim 1, wherein the specific attribute includes, at least, a fact that the first metal resource was provided by a specific one party of the plurality of parties, and the party associated with the specific attribute is the specific one party.

3. The method according to claim 1 or 2, wherein the specific attribute includes, at least, a fact that the first metal resource originates from a specific use, and the party associated with the specific attribute is a party associated with the same use as the specific use.

4. The method according to any one of claims 1 - 3, wherein the specific attribute includes, at least, a fact that the first metal resource originates from a specific location, and the party associated with the specific attribute is a party associated with the specific location.

5. The method according to any one of claims 1 - 4, wherein the specific attribute includes, at least, a fact that the first metal resource originates from a specific manufacturer, and the party associated with the specific attribute is the specific manufacturer.

6. The method according to any one of claims 1 - 5, wherein the method further comprises
a step of receiving information by the terminal from the server, wherein the information is regarding a second shipment quota for the recycled product that is accounted for as having been manufactured exclusively from the first metal resource having the specific attribute, wherein the second shipment quota depends on an amount by which the first metal resource provided by the plurality of parties contributed to, or is expected to contribute to, the manufacture of the metal material in the third step.

7. The method according to any one of claims 1 - 6, further comprising a step of receiving, by the terminal from the server, information regarding a carbon footprint of the recycled product (hereinafter referred to as "product carbon footprint information") assigned to the recycled product, which is accounted for as having been manufactured exclusively from the first metal resource having the specific attribute.

8. The method according to claim 7, further comprising a step of receiving, by the terminal, information regarding a carbon footprint of the first metal resource.

9. The method according to claim 8, further comprising a step of receiving, by the terminal from the server, information regarding the carbon footprint of the first metal resource and/or information regarding a carbon footprint related to the third step.

10. The method according to any one of claims 1 - 6, further comprising a step of sending, by the terminal to the server, information regarding a carbon footprint of the recycled product (hereinafter referred to as "product carbon footprint information") assigned to the recycled product, which is accounted for as having been manufactured exclusively from the first metal resource having the specific attribute.

11. The method according to any one of claims 7 - 10, wherein the product carbon footprint information is calculated on the premise that the recycled product was manufactured exclusively from the first metal resource having the specific attribute, and is calculated using, at least, information regarding the carbon footprint of the first metal resource having the specific attribute.

12. The method according to any one of claims 1 - 11, wherein the metal material is electrolytic copper.

13. A method for manufacturing a metal material, using the method according to any one of claims 1 - 12, such that the metal material is accounted for as having been manufactured exclusively from the first metal resource.

14. A method for manufacturing a recycled product using the method according to any one of claims 7 - 10, wherein information regarding the carbon footprint of the recycled product is assigned to the recycled product.
